(19) Europäisches Patentamt
European Patent Office
Office européen des brevets

(11) **EP 4 600 382 A1**

(12) **EUROPEAN PATENT APPLICATION**
published in accordance with Art. 153(4) EPC

(43) Date of publication:
**13.08.2025   Bulletin 2025/33**

(21) Application number: **22967226.6**

(22) Date of filing: **01.12.2022**

(51) International Patent Classification (IPC):
*C21D 8/02* (2006.01)       *C21D 9/46* (2006.01)
*C22C 38/00* (2006.01)      *C22C 38/60* (2006.01)
*C23C 2/06* (2006.01)

(52) Cooperative Patent Classification (CPC):
**C21D 8/02; C21D 9/46; C22C 38/00; C22C 38/06; C22C 38/60; C23C 2/06**

(86) International application number:
**PCT/JP2022/044482**

(87) International publication number:
**WO 2024/116396 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **JFE Steel Corporation Tokyo 100-0011 (JP)**

(72) Inventors:
• **MINAMI Hidekazu**
  **Tokyo 100-0011 (JP)**
• **KAWASAKI Yoshiyasu**
  **Tokyo 100-0011 (JP)**
• **TOJI Yuki**
  **Tokyo 100-0011 (JP)**
• **WADA Yusuke**
  **Tokyo 100-0011 (JP)**

(74) Representative: **Hoffmann Eitle**
  **Patent- und Rechtsanwälte PartmbB**
  **Arabellastraße 30**
  **81925 München (DE)**

(54) **HOT-DIP GALVANIZED STEEL SHEET, MEMBER FORMED BY USING HOT-DIP GALVANIZED STEEL SHEET, REINFORCING COMPONENT FORMED FROM MEMBER FOR AUTOMOBILE FRAME STRUCTURAL COMPONENT OR FOR AUTOMOBILE, AND METHOD FOR PRODUCING HOT-DIP GALVANIZED STEEL SHEET AND MEMBER**

(57)     Provided is a hot-dip galvanized steel sheet having high strength, high ductility, high stretch flangeability and bendability, and reduced anisotropy of stretch flange fracture. The hot-dip galvanized steel sheet comprises: a base steel sheet; and a hot-dip galvanized layer formed on a surface thereof, wherein the base steel sheet includes: a predetermined chemical composition; and a microstructure at a position 1/4 the sheet thickness from the surface of the base steel sheet in a depth direction in which an area ratio of martensite is 10 % to 80 %, an area ratio of ferrite is 20 % to 90 %, an area ratio of retained austenite is 10 % or less, and a proportion of an area ratio of ferrite having {001} orientation to that of all ferrite is 0.50 or less, and a low-temperature-range diffusible hydrogen content in the base steel sheet is 0.015 mass ppm or less.

EP 4 600 382 A1

**Description**

TECHNICAL FIELD

The present disclosure relates to a hot-dip galvanized steel sheet, a member produced using the hot-dip galvanized steel sheet, an automotive framework structural component or automotive reinforcing component comprising the member, and production methods for the hot-dip galvanized steel sheet and the member.

BACKGROUND

Efforts have been made to increase the strength of steel sheets for automobiles in order to improve crashworthiness while reducing $CO_2$ emissions by reduction of vehicle weight. Moreover, with the introduction of a series of new regulations, there has been an increase in the number of cases where high-strength steel sheets are used for main structural components and reinforcing components forming the framework of the automotive cabin (hereafter also referred to as automotive framework structural components, etc.) in order to increase the strength of the automotive body. In particular, the number of cases where high-strength steel sheets with a tensile strength (hereafter also referred to as TS) of 780 MPa or more are used is increasing significantly.

High-strength steel sheets used in automotive framework structural components, etc. are required to have high stretch flangeability when formed into the desired shape. Among automotive framework structural components, for example, crash boxes and the like have bent portions. Accordingly, steel sheets having high bendability are also desirable from the viewpoint of formability.

As a technology related to such high-strength steel sheets, for example, Patent Literature (PTL) 1 discloses a high-strength hot-dip galvanized steel sheet wherein a base steel sheet has a chemical composition containing specified amounts of C, Si, Mn, P, S, Al, N, Ca, and Cr where [%Mn]/[%Si] is 2.9 or more and 11.7 or less with the balance consisting of Fe and inevitable impurities and has a steel microstructure containing specified amounts of one or two selected from the group consisting of bainite and ferrite, tempered martensite, quenched martensite, and retained austenite, the ratio of the amount of Si concentration to the amount of Mn concentration in a surface layer of the base steel sheet is 0.7 or more and 1.3 or less, and the diffusible hydrogen content in the base steel sheet is 0.80 mass ppm or less.

CITATION LIST

Patent Literature

PTL 1: WO 2020/170542 A1

SUMMARY

(Technical Problem)

However, the hot-dip galvanized steel sheet described in PTL 1 does not take into consideration anisotropy of stretch flange fracture. There is thus a need to develop a hot-dip galvanized steel sheet having high strength, high ductility, high stretch flangeability and bendability, and reduced anisotropy of stretch flange fracture in order to increase the application ratio of hot-dip galvanized steel sheets to automotive framework structural components, etc.

It could therefore be helpful to provide a hot-dip galvanized steel sheet having high strength, high ductility, high stretch flangeability and bendability, and reduced anisotropy of stretch flange fracture, together with a production method therefor.

It could also be helpful to provide a member produced using the hot-dip galvanized steel sheet, together with a production method therefor.

Herein, "high strength" means that the tensile strength (hereafter also referred to as TS) measured in accordance with JIS Z 2241 is 780 MPa or more.

"High ductility" means that the product (TS × El) of TS and total elongation (hereafter also referred to as El) measured in accordance with JIS Z 2241 is 13000 MPa·% or more.

"High stretch flangeability" means that the hole expansion ratio (hereafter also referred to as $\lambda$) measured in accordance with JIS Z 2256 is 20 % or more.

"High bendability" means that, in the bend test described in the EXAMPLES section below, none of the five samples evaluated cracks or one or more of the five samples has microfissures (microcracks) of less than 200 $\mu$m. This bend test is in accordance with JIS Z 2248.

"Reduced anisotropy of stretch flange fracture" means that, in the hole expanding test described in the EXAMPLES section below, the crack initiation rate in each of the rolling direction of the steel sheet (L direction), a direction at 45 degrees to the rolling direction of the steel sheet (D direction), and a direction orthogonal to the rolling direction of the steel sheet (C direction) is 60 % or less.

(Solution to Problem)

Upon careful examination, we discovered the following.

In order to obtain a high-strength hot-dip galvanized steel sheet having high ductility, high stretch flangeability and bendability, and reduced anisotropy of stretch flange fracture, it is important that the base steel sheet has, in addition to a specified chemical composition, a steel microstructure containing martensite (quenched martensite, tempered martensite, and bainite) from the viewpoint of increasing strength, it is important that the steel microstructure of the base steel sheet contains a certain amount of ferrite from the viewpoint of controlling ductility, and it is important that the proportion of the area ratio of ferrite having {001} orientation to the area ratio of all ferrite (area ratio of ferrite having {001} orientation/area ratio of all ferrite) and the amount of hydrogen released in a low temperature range (temperature range up to 50 °C) when the base steel sheet is heated (low-temperature-range diffusible hydrogen content) are within specified numerical ranges from the viewpoint of reducing anisotropy of stretch flange fracture. Specifically, in order to achieve the stated object and especially to reduce anisotropy of stretch flange fracture, it is important that the proportion of the area ratio of ferrite having {001} orientation to the area ratio of all ferrite is 0.50 or less and the low-temperature-range diffusible hydrogen content is 0.015 mass ppm or less.

We thus provide:

(1) A hot-dip galvanized steel sheet comprising: a base steel sheet; and a hot-dip galvanized layer formed on a surface of the base steel sheet, wherein the base steel sheet includes: a chemical composition containing (consisting of), in mass%, C: 0.030 % or more and 0.500 % or less, Si: 0.01 % or more and 2.50 % or less, Mn: 0.10 % or more and 5.00 % or less, P: 0.100 % or less, S: 0.0200 % or less, Al: 1.000 % or less, N: 0.0100 % or less, and O: 0.0100 % or less with a balance consisting of Fe and inevitable impurities; and a steel microstructure at a position of 1/4 of a sheet thickness of the base steel sheet in which an area ratio of martensite is 10 % or more and 80 % or less, an area ratio of ferrite is 20 % or more and 90 % or less, an area ratio of retained austenite is 10 % or less, and a proportion of an area ratio of ferrite having {001} orientation to an area ratio of all ferrite is 0.50 or less, and a low-temperature-range diffusible hydrogen content in the base steel sheet is 0.015 mass ppm or less, the low-temperature-range diffusible hydrogen content being an amount of hydrogen released when the base steel sheet is heated up to 50 °C.

(2) The hot-dip galvanized steel sheet according to (1), wherein the chemical composition further contains, in mass%, at least one element selected from the group consisting of Ti: 0.200 % or less, Nb: 0.200 % or less, V: 0.200 % or less, Ta: 0.10 % or less, W: 0.10 % or less, B: 0.0100 % or less, Cr: 1.00 % or less, Mo: 1.00 % or less, Ni: 1.00 % or less, Co: 0.010 % or less, Cu: 1.00 % or less, Sn: 0.200 % or less, Sb: 0.200 % or less, Ca: 0.0100 % or less, Mg: 0.0100 % or less, REM: 0.0100 % or less, Zr: 0.100 % or less, Te: 0.100 % or less, Hf: 0.10 % or less, and Bi: 0.200 % or less.

(3) The hot-dip galvanized steel sheet according to (1) or (2), comprising a metal coated or plated layer between the base steel sheet and the hot-dip galvanized layer.

(4) The hot-dip galvanized steel sheet according to any one of (1) to (3), wherein the base steel sheet includes a soft surface layer that is a region of 200 μm or less from the surface of the base steel sheet in a sheet thickness direction and having a Vickers hardness of 85 % or less of a Vickers hardness at the position of 1/4 of the sheet thickness of the base steel sheet.

(5) The hot-dip galvanized steel sheet according to (4), wherein

when nanohardness is measured at 300 points or more in a 50 μm × 50 μm region of a sheet plane at each of a position of 1/4 of a depth of the soft surface layer from the surface of the base steel sheet in the sheet thickness direction and a position of 1/2 of the depth of the soft surface layer from the surface of the base steel sheet in the sheet thickness direction,

a proportion of a number of measurements in which the nanohardness of the sheet plane at the position of 1/4 of the depth of the soft surface layer from the surface of the base steel sheet in the sheet thickness direction is 7.0 GPa or more is 0.10 or less relative to a total number of measurements,

a standard deviation σ of the nanohardness of the sheet plane at the position of 1/4 of the depth of the soft surface layer from the surface of the base steel sheet in the sheet thickness direction is 1.8 GPa or less, and

a standard deviation σ of the nanohardness of the sheet plane at the position of 1/2 of the depth of the soft surface layer from the surface of the base steel sheet in the sheet thickness direction is 2.2 GPa or less.

(6) The hot-dip galvanized steel sheet according to any one of (1) to (5), wherein the hot-dip galvanized layer is a galvannealed layer.

(7) A member produced using the hot-dip galvanized steel sheet according to any one of (1) to (6).

(8) An automotive framework structural component or automotive reinforcing component comprising the member according to (7).

(9) A production method for a hot-dip galvanized steel sheet, the production method comprising: subjecting a steel slab having the chemical composition according to (1) or (2) to hot rolling under a condition that a coiling temperature is 400 °C or more and 700 °C or less, to obtain a hot-rolled steel sheet; thereafter pickling the hot-rolled steel sheet; thereafter subjecting the hot-rolled steel sheet to cold rolling under a condition that a total rolling reduction ratio is 40 % or more and a number of passes from when a cumulative rolling reduction ratio of 30 % or more is reached to when the total rolling reduction ratio is reached is 2 or more, to obtain a cold-rolled steel sheet; thereafter subjecting the cold-rolled steel sheet to annealing under a condition that an average heating rate in a temperature range of 250 °C or more and 600 °C or less is 1.0 °C/s or more and 100 °C/s or less and an annealing temperature is 750 °C or more and 900 °C or less; thereafter subjecting the cold-rolled steel sheet to hot-dip galvanizing treatment to obtain a coated steel sheet; and thereafter cooling the coated steel sheet.

(10) The production method for a hot-dip galvanized steel sheet according to (9), wherein in the cooling of the coated steel sheet, the coated steel sheet is kept in a temperature range of 100 °C or more and 450 °C or less for 5 seconds or more and then cooled.

(11) The production method for a hot-dip galvanized steel sheet according to (9), wherein in the cooling of the coated steel sheet, cooling is stopped at a cooling stop temperature of 300 °C or less, and then the coated steel sheet is reheated to a temperature range of (the cooling stop temperature + 50 °C) or more and 450 °C or less and kept in the temperature range for 5 seconds or more, and then cooled.

(12) The production method for a hot-dip galvanized steel sheet according to any one of (9) to (11), wherein the annealing is performed in an atmosphere with a dew point of -25 °C or more.

(13) The production method for a hot-dip galvanized steel sheet according to any one of (9) to (12), comprising performing metal coating or plating treatment on one or both sides of the cold-rolled steel sheet to form a metal coated or plated layer, before the annealing.

(14) The production method for a hot-dip galvanized steel sheet according to any one of (9) to (13), comprising subjecting the steel sheet after the hot-dip galvanizing treatment to alloying treatment.

(15) A production method for a member, the production method comprising subjecting the hot-dip galvanized steel sheet according to any one of (1) to (8) to at least one of forming or joining to obtain the member.

(Advantageous Effect)

It is thus possible to provide a hot-dip galvanized steel sheet having high strength, high ductility, high stretch flangeability and bendability, and reduced anisotropy of stretch flange fracture, and a member produced using the hot-dip galvanized steel sheet.

It is also possible to provide production methods for the hot-dip galvanized steel sheet and the member produced using the hot-dip galvanized steel sheet.

BRIEF DESCRIPTION OF THE DRAWINGS

In the accompanying drawings:

FIGS. 1A and 1B are schematic diagrams relating to preparation of a sample for a V bend + orthogonal VDA bend test in examples, where FIG. 1A relates to V bending (primary bending) and FIG. 1B relates to orthogonal VDA bending (secondary bending); and

FIGS. 2A to 2C are schematic diagrams relating to a sample for an axial crush test and to the test in examples, where FIG. 2A is a front view of the test member, FIG. 2B is a perspective view of the test member, and FIG. 2C is a schematic diagram illustrating the axial crush test.

DETAILED DESCRIPTION

The presently disclosed technology will be described by way of embodiments below. The present disclosure is not limited to the following embodiments.

[1] Hot-dip galvanized steel sheet

First, a hot-dip galvanized steel sheet according to the present disclosure will be described.

[1-1] Base steel sheet

The hot-dip galvanized steel sheet comprises a base steel sheet and a hot-dip galvanized layer formed on the surface of the base steel sheet. The base steel sheet in the hot-dip galvanized steel sheet will be described.

[1-1-1] Chemical composition

The appropriate range of the chemical composition of the base steel sheet and the reasons for limiting to the appropriate range will be described. In the following description, "%" representing the content of each constituent element of the steel sheet is "mass%" unless otherwise specified. Herein, each numeric value range expressed in the form of "A to B" denotes the range that includes values A and B as its lower and upper limits.

[C: 0.030 % or more and 0.500 % or less]

C is one of the important basic components of steel. In the present disclosure, in particular, C is an important element that influences the area ratios of martensite and ferrite. If the C content is less than 0.030 %, the fraction of martensite decreases, making it difficult to achieve the desired TS. If the C content is more than 0.500 %, martensite causes brittle fracture, making it difficult to achieve the desired ductility. The C content is therefore 0.030 % or more and 0.500 % or less. The C content is preferably 0.050 % or more and more preferably 0.070 % or more. The C content is preferably 0.400 % or less and more preferably 0.300 % or less.

[Si: 0.01 % or more and 2.50 % or less]

Si is one of the important basic components of steel. In the present disclosure, in particular, Si is an important element that influences the area ratios of martensite and ferrite. If the Si content is less than 0.01 %, the area ratio of ferrite decreases, making it difficult to achieve the desired ductility. If the Si content is more than 2.50 %, the formation of carbides during continuous annealing is suppressed and the formation of retained austenite, which is a phase with high hydrogen solid solubility, is promoted, so that hydrogen desorption from the coated steel sheet is not promoted, the low-temperature-range diffusible hydrogen content of the base steel sheet increases, and anisotropy of stretch flange fracture increases. Besides, retained austenite transforms into martensite during blanking and the formation of voids during hole expansion increases, which may cause a decrease in λ and a decrease in bendability. The Si content is therefore 0.01 % or more and 2.50 % or less. The Si content is preferably 0.05 % or more and more preferably 0.10 % or more. The Si content is preferably 2.00 % or less and more preferably 1.80 % or less.

[Mn: 0.10 % or more and 5.00 % or less]

Mn is one of the important basic components of steel. In the present disclosure, in particular, Mn is an important element that influences the area ratios of martensite and ferrite. If the Mn content is less than 0.10 %, the area ratio of martensite decreases, making it difficult to achieve the desired TS. If the Mn content is more than 5.00 %, the area ratio of ferrite decreases, making it difficult to achieve the desired ductility. The Mn content is therefore 0.10 % or more and 5.00 % or less. The Mn content is preferably 0.80 % or more and more preferably 1.00 % or more. The Mn content is preferably 4.50 % or less and more preferably 4.00 % or less.

[P: 0.100 % or less]

P is an element that segregates to and embrittles the prior austenite grain boundaries and decreases the ultimate deformability of the steel sheet, and thus may cause a decrease in λ and a decrease in bendability. The P content is therefore 0.100 % or less. Although no lower limit is placed on the P content, the P content is preferably 0.001 % or more given that P is a solid-solution-strengthening element and can increase the strength of the steel sheet. The P content is preferably 0.001 % or more. The P content is preferably 0.070 % or less.

[S: 0.0200 % or less]

S is an element that exists as sulfides and decreases the ultimate deformability of the steel sheet, and thus may cause a decrease in λ and a decrease in bendability. The S content is therefore 0.0200 % or less. Although no lower limit is placed on the S content, the S content is preferably 0.0001 % or more due to production technology constraints. The S content is preferably 0.0001 % or more. The S content is preferably 0.0050 % or less.

[Al: 1.000 % or less]

Al is an element that increases the $A_3$ transformation point, causing the amount of ferrite in the steel microstructure to increase. This can make it difficult to achieve the desired TS. The Al content is therefore 1.000 % or less. Although no lower limit is placed on the Al content, the Al content is preferably 0.001 % or more from the viewpoint of suppressing the formation of carbides during continuous annealing and promoting the formation of retained austenite. The Al content is preferably 0.001 % or more. The Al content is preferably 0.100 % or less.

[N: 0.0100 % or less]

N is an element that exists as nitrides and decreases the ultimate deformability of the steel sheet, and thus may cause a decrease in λ and a decrease in bendability. The N content is therefore 0.0100 % or less. Although no lower limit is placed on the N content, the N content is preferably 0.0001 % or more due to production technology constraints. The N content is preferably 0.0001 % or more. The N content is preferably 0.0050 % or less.

[O: 0.0100 % or less]

O is an element that exists as oxides and decreases the ultimate deformability of the steel sheet, and thus may cause a decrease in λ and a decrease in bendability. The O content is therefore 0.0100 % or less. Although no lower limit is placed on the O content, the O content is preferably 0.0001 % or more due to production technology constraints. The O content is preferably 0.0001 % or more. The O content is preferably 0.0050 % or less.

[Optional components]

In addition to the foregoing chemical composition, the base steel sheet may further contain, in mass%, at least one element selected from the group consisting of

Ti: 0.200 % or less, Nb: 0.200 % or less, V: 0.200 % or less,
Ta: 0.10 % or less, W: 0.10 % or less,
B: 0.0100 % or less,
Cr: 1.00 % or less, Mo: 1.00 % or less, Ni: 1.00 % or less,
Co: 0.010 % or less,
Cu: 1.00 % or less,
Sn: 0.200 % or less,
Sb: 0.200 % or less,
Ca: 0.0100 % or less, Mg: 0.0100 % or less, REM: 0.0100 % or less,
Zr: 0.020 % or less, Te: 0.020 % or less,
Hf: 0.10 % or less, and
Bi: 0.200 % or less.

These elements may be used alone or in combination of two or more.

In the case where any of Ti, Nb, and V is contained, the Ti, Nb, and V contents are each preferably 0.200 % or less and more preferably 0.100 % or less in order to avoid the formation of a large amount of coarse precipitates or inclusions, which causes the ultimate deformability of the steel sheet to decrease and results in a decrease in λ and a decrease in bendability. Although no lower limit is placed on the Ti, Nb, and V contents, the Ti, Nb, and V contents are each preferably 0.001 % or more because the strength of the steel sheet increases as a result of the formation of fine carbides, nitrides, or carbonitrides during hot rolling or continuous annealing.

In the case where any of Ta and W is contained, the Ta and W contents are each preferably 0.10 % or less and more preferably 0.08 % or less in order to avoid the formation of a large amount of coarse precipitates or inclusions, which causes the ultimate deformability of the steel sheet to decrease and results in a decrease in λ and a decrease in bendability. Although no lower limit is placed on the Ta and W contents, the Ta and W contents are each preferably 0.01 % or more because the strength of the steel sheet increases as a result of the formation of fine carbides, nitrides, or carbonitrides during hot rolling or continuous annealing.

In the case where B is contained, the B content is preferably 0.0100 % or less and more preferably 0.0080 % or less in order to avoid the occurrence of cracks inside the steel sheet during casting or hot rolling, which causes the ultimate deformability of the steel sheet to decrease and results in a decrease in λ and a decrease in bendability. Although no lower limit is placed on the B content, the B content is preferably 0.0003 % or more given that B is an element that segregates to the austenite grain boundaries during annealing and improves quench hardenability.

In the case where any of Cr, Mo, and Ni is contained, the Cr, Mo, and Ni contents are each preferably 1.00 % or less and more preferably 0.80 % or less in order to avoid the increase of coarse precipitates or inclusions, which causes the ultimate deformability of the steel sheet to decrease and results in a decrease in λ and a decrease in bendability. Although no lower limit is placed on the Cr, Mo, and Ni contents, the Cr, Mo, and Ni contents are each preferably 0.01 % or more given that Cr, Mo, and Ni are elements that improve quench hardenability.

In the case where Co is contained, the Co content is preferably 0.010 % or less and more preferably 0.008 % or less in order to avoid the increase of coarse precipitates or inclusions, which causes the ultimate deformability of the steel sheet to decrease and results in a decrease in λ and a decrease in bendability. Although no lower limit is placed on the Co content, the Co content is preferably 0.001 % or more given that Co is an element that improves quench hardenability.

In the case where Cu is contained, the Cu content is preferably 1.00 % or less and more preferably 0.80 % or less in order to avoid the increase of coarse precipitates or inclusions, which causes the ultimate deformability of the steel sheet to decrease and results in a decrease in λ and a decrease in bendability. Although no lower limit is placed on the Cu content, the Cu content is preferably 0.01 % or more given that Cu is an element that improves quench hardenability.

In the case where Sn is contained, the Sn content is preferably 0.200 % or less and more preferably 0.100 % or less in order to avoid the occurrence of cracks inside the steel sheet during casting or hot rolling, which causes the ultimate deformability of the steel sheet to decrease and results in a decrease in λ and a decrease in bendability. Although no lower limit is placed on the Sn content, the Sn content is preferably 0.001 % or more given that Sn is an element that improves quench hardenability.

In the case where Sb is contained, the Sb content is preferably 0.200 % or less and more preferably 0.100 % or less in order to avoid the increase of coarse precipitates or inclusions, which causes the ultimate deformability of the steel sheet to decrease and results in a decrease in λ and a decrease in bendability. Although no lower limit is placed on the Sb content, the Sb content is preferably 0.001 % or more given that Sb is an element that controls the thickness of the soft surface layer and enables strength adjustment.

In the case where any of Ca, Mg, and REM is contained, the Ca, Mg, and REM contents are each preferably 0.0100 % or less and more preferably 0.0050 % or less in order to avoid the increase of coarse precipitates or inclusions, which causes the ultimate deformability of the steel sheet to decrease and results in a decrease in λ and a decrease in bendability. Although no lower limit is placed on the Ca, Mg, and REM contents, the Ca, Mg, and REM contents are each preferably 0.0001 % or more given that Ca, Mg, and REM are elements that make the shape of nitrides and sulfides spheroidal and improve the ultimate deformability of the steel sheet.

In the case where any of Zr and Te is contained, the Zr and Te contents are each preferably 0.100 % or less and more preferably 0.080 % or less in order to avoid the increase of coarse precipitates or inclusions, which causes the ultimate deformability of the steel sheet to decrease and results in a decrease in λ and a decrease in bendability. Although no lower limit is placed on the Zr and Te contents, the Zr and Te contents are each preferably 0.001 % or more given that Zr and Te are elements that make the shape of nitrides and sulfides spheroidal and improve the ultimate deformability of the steel sheet.

In the case where Hf is contained, the Hf content is preferably 0.10 % or less and more preferably 0.08 % or less in order to avoid the increase of coarse precipitates or inclusions, which causes the ultimate deformability of the steel sheet to decrease and results in a decrease in λ and a decrease in bendability. Although no lower limit is placed on the Hf content, the Hf content is preferably 0.01 % or more given that Hf is an element that makes the shape of nitrides and sulfides spheroidal and improves the ultimate deformability of the steel sheet.

In the case where Bi is contained, the Bi content is preferably 0.200 % or less and more preferably 0.100 % or less in order to avoid the increase of coarse precipitates or inclusions, which causes the ultimate deformability of the steel sheet to decrease and results in a decrease in λ and a decrease in bendability. Although no lower limit is placed on the Bi content, the Bi content is preferably 0.001 % or more given that Bi is an element that reduces segregation.

The base steel sheet in the hot-dip galvanized steel sheet according to the present disclosure has a chemical composition that contains essential components and may also contain optional components, with the balance consisting of Fe and inevitable impurities. Examples of the inevitable impurities include Zn, Pb, As, Ge, Sr, and Cs. An allowable total content of these inevitable impurities is 0.100 % or less.

[1-1-2] Steel microstructure

The steel microstructure of the base steel sheet will be described.

[Area ratio of martensite: 10 % or more and 80 % or less]

If the area ratio of martensite is less than 10 %, it is difficult to achieve a TS of 780 MPa or more. If the area ratio of martensite is more than 80 %, it is difficult to achieve the desired ductility. The area ratio of martensite is therefore 10 % or more and 80 % or less. The area ratio of martensite is preferably 15 % or more and more preferably 25 % or more. The area ratio of martensite is preferably 75 % or less and more preferably 70 % or less.

The term "martensite" herein includes quenched martensite (fresh martensite), tempered martensite, and bainite. The observation position of the area ratio of martensite is a position of 1/4 of the sheet thickness of the base steel sheet as described later.

[Area ratio of ferrite: 20 % or more and 90 % or less]

If the area ratio of ferrite is less than 20 %, it is difficult to achieve the desired ductility. If the area ratio of ferrite is more than 90 %, it is difficult to achieve a TS of 780 MPa or more. The area ratio of ferrite is therefore 20 % or more and 90 % or less. The area ratio of ferrite is preferably 25 % or more and more preferably 30 % or more. The area ratio of ferrite is preferably 85 % or less and more preferably 80 % or less.

The term "ferrite" herein includes polygonal ferrite and bainitic ferrite. The observation position of the area ratio of ferrite is a position of 1/4 of the sheet thickness of the base steel sheet as described later.

The method of measuring the area ratio of each of martensite (quenched martensite, tempered martensite, and bainite) and ferrite (polygonal ferrite and bainitic ferrite) is as follows.

A sample is cut out from the base steel sheet so that a sheet thickness section (L-section at the position of 1/4 of the sheet thickness) parallel to the rolling direction will be the observation plane. The observation plane of the sample is mirror-polished using diamond paste, then finish-polished using alumina, and then etched with 3 vol% nital to reveal the microstructure.

The observation plane of the sample is then observed using a scanning electron microscope (SEM) at 3000x magnification with an accelerating voltage of 10 kV, and SEM images for three observation fields (40 $\mu$m $\times$ 30 $\mu$m per observation field) are obtained.

The area ratio of each microstructure (ferrite (polygonal ferrite and bainitic ferrite), martensite (quenched martensite, tempered martensite, and bainite)) is calculated from the obtained SEM images using Adobe Photoshop (produced by Adobe Systems Inc.). Specifically, a value obtained by dividing the area of each microstructure by the measurement area is taken as the area ratio of the microstructure. The area ratio of each microstructure is calculated for the three observation fields, and the average value is taken as the area ratio of the microstructure.

In SEM images, ferrite (polygonal ferrite and bainitic ferrite) is a flat microstructure that is in recessed portions and does not contain carbides, tempered martensite and bainite are microstructures that are in recessed portions and contain fine carbides, and quenched martensite is a microstructure that is in protruding portions and has fine irregularities inside. They can be distinguished from each other. Tempered martensite and bainite need not be distinguishable from each other because the total area ratio is calculated as the area ratio of martensite.

[Area ratio of retained austenite: 10 % or less]

Since retained austenite is a phase with high hydrogen solid solubility, if the area ratio of retained austenite is more than 10 %, hydrogen desorption from the coated steel sheet is not promoted, the low-temperature-range diffusible hydrogen content of the base steel sheet increases, and anisotropy of stretch flange fracture increases. Besides, retained austenite transforms into martensite during blanking and the formation of voids during hole expansion increases, which may cause a decrease in $\lambda$ and a decrease in bendability. The area ratio of retained austenite is therefore 10 % or less. A lower area ratio of retained austenite is better. The area ratio of retained austenite is preferably 7 % or less and more preferably 5 % or less, and may be 0 %. The observation position of the area ratio of the retained austenite is the position of 1/4 of the sheet thickness of the base steel sheet, and the measurement method is as follows.

First, the base steel sheet is ground so that the position of 1/4 of the sheet thickness (i.e. position corresponding to 1/4 of the sheet thickness from the steel sheet surface in the depth direction) will be the measurement plane, and then further polished by 0.1 mm by chemical polishing to obtain a sample.

For the measurement plane of the sample, the integrated reflection intensity of each of (200) plane, (220) plane, and (311) plane of fcc iron (austenite) and (200) plane, (211) plane, and (220) plane of bcc iron is measured using an X-ray diffractometer with a Co K$\alpha$ radiation source.

The intensity ratio of the integrated reflection intensity of each plane of fcc iron to the integrated reflection intensity of each plane of bcc iron is calculated. The average of the nine intensity ratios is taken as the volume ratio of retained austenite. Assuming that the volume ratio of retained austenite is three-dimensionally uniform, the volume ratio of retained austenite is taken as the area ratio of retained austenite at the position of 1/4 of the sheet thickness of the base steel sheet.

[Residual microstructure]

The steel microstructure according to the present disclosure may contain microstructure (residual microstructure) other than the foregoing martensite, ferrite, and retained austenite.

The residual microstructure is a microstructure other than martensite, ferrite, and retained austenite, and includes microstructures that are well known as microstructures of steel sheet, such as carbides including pearlite, cementite, and metastable carbides (epsilon ($\varepsilon$) carbide, eta ($\eta$) carbide, chi ($\chi$) carbide, etc.). The residual microstructure can be identified, for example, by observation using a SEM.

The area ratio of the residual microstructure at the position of 1/4 of the sheet thickness of the base steel sheet is preferably 5 % or less. The area ratio of the residual microstructure can be calculated using the following formula.

[Area ratio of residual microstructure (%)] = 100 - [Area ratio of martensite (%)] - [Area ratio of ferrite (%)] - [Area ratio of retained austenite (%)]

[Area ratio of ferrite having {001} orientation/area ratio of all ferrite: 0.50 or less]

The proportion of the area ratio of ferrite having {001} orientation to the area ratio of all ferrite (area ratio of ferrite having {001} orientation/area ratio of all ferrite) is a very important component in the present disclosure. In detail, we found that anisotropy of stretch flange fracture is highly dependent on the area ratio of ferrite having {001} orientation in the cold-rolled and annealed sheet, and if the proportion (area ratio of ferrite having {001} orientation/area ratio of all ferrite) is more than 0.50, it is difficult to significantly reduce anisotropy of stretch flange fracture. The proportion (area ratio of ferrite having {001} orientation/area ratio of all ferrite) is therefore 0.50 or less. A lower proportion (area ratio of ferrite having {001} orientation/area ratio of all ferrite) is better. The proportion (area ratio of ferrite having {001} orientation/area ratio of all ferrite) is preferably 0.45 or less and more preferably 0.43 or less, and may be 0.

The method of calculating the proportion (area ratio of ferrite having {001} orientation/area ratio of all ferrite) is as follows.

A sample is cut out so that a sheet thickness section (L-section) parallel to the rolling direction of the base steel sheet will be the observation plane. The observation plane of the sample is polished with diamond paste, then smoothed by buffing with a colloidal silica solution, and then etched with 0.1 vol% nital to minimize surface roughness of the sample and completely remove the work affected layer. Following this, the crystal orientation at the position of 1/4 of the sheet thickness (position corresponding to 1/4 of the sheet thickness from the steel sheet surface in the depth direction) is measured using SEM-EBSD (Electron Backscatter Diffraction). The obtained data is analyzed with OIM Analysis produced by AMETEK EDAX to extract the texture of only ferrite while excluding phases other than ferrite including martensite using the confidence index (CI) and the image quality (IQ). The proportion (area ratio of ferrite having {001} orientation/area ratio of all ferrite) can be calculated by determining the area ratio of ferrite having {001} orientation from the obtained orientation data of only ferrite.

[Low-temperature-range diffusible hydrogen content of base steel sheet: 0.015 mass ppm or less]

The low-temperature-range diffusible hydrogen content of the base steel sheet is a very important component in the present disclosure. In detail, we found that anisotropy of stretch flange fracture is highly dependent on the amount of hydrogen released from the base steel sheet in a low temperature range, specifically, a temperature range up to 50 °C (low-temperature-range diffusible hydrogen content) rather than the amount of hydrogen released from the base steel sheet in a high temperature range when the base steel sheet is heated, and that if the low-temperature-range diffusible hydrogen content in the base steel sheet is more than 0.015 mass ppm, it is difficult to significantly reduce anisotropy of stretch flange fracture while ensuring high ductility and high stretch flangeability and bendability. The low-temperature-range diffusible hydrogen content of the base steel sheet is therefore 0.015 mass ppm or less. A smaller low-temperature-range diffusible hydrogen content is better, and the low-temperature-range diffusible hydrogen content is preferably 0.010 mass ppm or less and more preferably 0.006 mass ppm or less, and may be 0 ppm.

The method of measuring the low-temperature-range diffusible hydrogen content of the base steel sheet is as follows.

A test piece of 30 mm in length and 5 mm in width is collected from the center position of the hot-dip galvanized steel sheet sample by shearing. Immediately after collection, the test piece is immersed in liquid nitrogen. The hot-dip galvanized layer of the test piece is alkali-removed while controlling the temperature of the treatment solution so that the surface temperature of the test piece will be 10 °C or less. Next, the test piece is loaded into a thermal desorption analysis device, and after waiting for 5 minutes with Ar gas flowing, heating is started. Specifically, the test piece is heated to a temperature of 300 °C at a heating rate of 200 °C/hr, and then cooled to room temperature. The surface temperature of the test piece at the start of heating is 10 °C or less.

The amount of hydrogen released from the test piece in the temperature range from the temperature at the start of heating (room temperature) to 50 °C (hereafter also referred to as a cumulative released hydrogen amount) is measured, and the low-temperature-range diffusible hydrogen content of the base steel sheet is calculated using the following formula.

[Low-temperature-range diffusible hydrogen content of base steel sheet (mass ppm)] = [Cumulative released hydrogen content (g)]/[Mass of test piece (g)] $\times$ 10$^6$

The low-temperature-range diffusible hydrogen content of the base steel sheet portion can be measured in the same manner as above for steel sheets obtained by subjecting hot-dip galvanized steel sheets to processing such as blanking, stretch flange forming, and bending and products (members) produced by welding the processed steel sheets.

[1-1-3] Others

The sheet thickness of the base steel sheet is not limited and can be set depending on the sheet thickness of the final hot-dip galvanized steel sheet. For example, the sheet thickness may be 0.3 mm or more and 3.0 mm or less.

The surface layer of the base steel sheet is preferably a soft layer (soft surface layer). The soft surface layer contributes to suppressing bending crack propagation during press forming and automotive body collision, with it being possible to further improve bending fracture resistance.

The "surface layer" refers to a region with a thickness of 200 $\mu$m from the surface of the base steel sheet to 200 $\mu$m in the sheet thickness direction.

The "soft layer" refers to a region having a Vickers hardness of 85 % or less of the Vickers hardness of the section (plane parallel to the steel sheet surface) at the position of 1/4 of the sheet thickness of the base steel sheet. The soft layer includes a decarburized layer in the surface layer of the base steel sheet.

The "soft surface layer" refers to the soft layer included in the surface layer. The whole or part of the surface layer may be the soft layer. The soft surface layer can be a region with a thickness of 200 $\mu$m or less from the surface of the base steel sheet in the sheet thickness direction.

For example, suppose a region having a Vickers hardness of 85 % or less of the section (plane parallel to the steel sheet surface) at the position of 1/4 of the sheet thickness of the base steel sheet is formed with a certain depth from the surface of the base steel sheet in the sheet thickness direction. If the certain depth is within 200 $\mu$m in the sheet thickness direction, the region with the thickness from the surface to the certain depth in the sheet thickness direction is the soft surface layer. If the certain depth is more than 200 $\mu$m in the sheet thickness direction, the region with a thickness of 200 $\mu$m from the surface of the base steel sheet to a depth of 200 $\mu$m in the sheet thickness direction is the soft surface layer.

In the case where the base steel sheet includes the soft surface layer, no lower limit is placed on the thickness of the soft surface layer, and the thickness of the soft surface layer is preferably 8 $\mu$m or more and more preferably more than 17 $\mu$m.

Vickers hardness is measured based on JIS Z 2244-1 (2020) with a load of 10 gf.

In the case where the base steel sheet includes the soft surface layer, when nanohardness is measured at 300 points or more in a 50 $\mu$m $\times$ 50 $\mu$m region of the sheet plane at a position of 1/4 of the depth of the soft surface layer from the surface of the base steel sheet in the sheet thickness direction (position of 1/4 of the thickness of the soft surface layer from the surface of the base steel sheet in the depth direction), the proportion of nanohardness of 7.0 GPa or more is preferably 0.10 or less. If the proportion of nanohardness of 7.0 GPa or more is 0.10 or less, the proportion of hard microstructures (martensite, etc.), inclusions, etc. is small, so that the formation and connection of voids and the propagation of cracks in hard microstructures (martensite, etc.), inclusions, etc. during press forming and collision (crash) can be further suppressed. Thus, excellent bendability during press forming and excellent bending fracture resistance during collision can be easily achieved.

In the present disclosure, in order to achieve excellent bendability during press forming and excellent bending fracture resistance during collision, it is preferable that the standard deviation $\sigma$ of the nanohardness of the sheet plane at the position of 1/4 of the depth of the soft surface layer from the surface of the base steel sheet in the sheet thickness direction is 1.8 GPa or less and the standard deviation $\sigma$ of the nanohardness of the sheet plane at the position of 1/2 of the depth of the soft surface layer from the surface of the base steel sheet in the sheet thickness direction is 2.2 GPa or less. If the standard deviation $\sigma$ of the nanohardness of the sheet plane at the position of 1/4 of the depth of the soft surface layer from the surface of the base steel sheet in the sheet thickness direction is 1.8 GPa or less and the standard deviation $\sigma$ of the nanohardness of the sheet plane at the position of 1/2 of the depth of the soft surface layer from the surface of the base steel sheet in the sheet thickness direction is 2.2 GPa or less, the difference in microscopic microstructure hardness is small, so that the formation and connection of voids and the propagation of cracks during press forming and collision can be further suppressed. Thus, bendability and excellent bending fracture resistance during collision can be easily achieved.

The standard deviation $\sigma$ of the nanohardness of the sheet plane at the position of 1/4 of the depth of the soft surface layer from the surface of the base steel sheet in the sheet thickness direction is more preferably 1.7 GPa or less. The standard deviation $\sigma$ of the nanohardness of the sheet plane at the position of 1/2 of the depth of the soft surface layer from the surface of the base steel sheet in the sheet thickness direction is more preferably 2.1 GPa or less.

The nanohardness of the sheet plane at each of the positions of 1/4 and 1/2 of the depth in the sheet thickness direction is hardness measured by the following method.

First, in the case where a coated or plated layer is formed, after peeling off the coated or plated layer, mechanical polishing is performed to the position of 1/4 of the depth of the soft surface layer from the surface of the base steel sheet in the sheet thickness direction. Buffing with diamond and alumina is then performed, and further colloidal silica polishing is performed. The nanohardness is measured using a Berkovich diamond indenter under the following conditions: load: 500 $\mu$N, measurement region: 50 $\mu$m $\times$ 50 $\mu$m, and indentation spacing: 2 $\mu$m.

Moreover, mechanical polishing is performed to the position of 1/2 of the depth of the soft surface layer in the sheet thickness direction. Buffing with diamond and alumina is then performed, and further colloidal silica polishing is performed. The nanohardness is measured using a Berkovich diamond indenter under the following conditions: load: 500 $\mu$N, measurement region: 50 $\mu$m $\times$ 50 $\mu$m, and indentation spacing: 2 $\mu$m.

The thickness of the soft surface layer can be measured by the following method. After smoothing a sheet thickness section (L-section) parallel to the rolling direction of the base steel sheet by wet polishing, measurement is performed using a Vickers hardness meter with a load of 10 gf from a position of 1 $\mu$m in the sheet thickness direction from the surface of the base steel sheet to a position of 100 $\mu$m in the sheet thickness direction at 1 $\mu$m intervals. After this, measurement is performed at 20 $\mu$m intervals up to the sheet thickness center. A region where the hardness is 85 % or less of the hardness at the position of 1/4 of the sheet thickness is defined as the soft layer (soft surface layer), and the thickness of the region in the sheet thickness direction is taken as the thickness of the soft layer.

[1-2] Metal coated or plated layer

The base steel sheet preferably has a metal coated or plated layer on one or both sides. The metal coated or plated layer contributes to suppressing bending cracks during press forming and automotive body collision, with it being possible to further improve bending fracture resistance.

The metal coated or plated layer is formed directly on the surface of the base steel sheet, and is a metal coated or plated layer containing one or more selected from Al, Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi in a total amount of more than 50 mass%, excluding galvanized layers such as hot-dip galvanized layers, galvannealed layers, and electrogalvanized layers. A first coated or plated layer is preferably a metal electroplated layer. In the following, a metal electroplated layer will be described as an example.

As a result of the metal electroplated layer being formed on the surface of the steel sheet, the outermost metal electroplated layer contributes to suppressing bending cracks during press forming and automotive body collision, with it being possible to further improve bending fracture resistance.

The metal species of the metal electroplated layer may be any of Al, Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, but is preferably Fe. In the following, a Fe-based electroplated layer will be described as an example.

The coating weight of the Fe-based electroplated layer is more than 0 g/m$^2$, and preferably 2.0 g/m$^2$ or more. Although no upper limit is placed on the coating weight of the Fe-based electroplated layer per side, the coating weight of the Fe-based electroplated layer per side is preferably 60 g/m$^2$ or less from the viewpoint of cost. The coating weight of the Fe-based electroplated layer is preferably 50 g/m$^2$ or less, more preferably 40 g/m$^2$ or less, and further preferably 30 g/m$^2$ or less.

The coating weight of the Fe-based electroplated layer is measured as follows. A sample of 10 mm $\times$ 15 mm size is collected from the Fe-based electroplated steel sheet and embedded in resin to prepare a cross-section resin-embedded sample. Any three parts of the cross section are observed using a scanning electron microscope (SEM) with an accelerating voltage of 15 kV and 2000x to 10000x magnification depending on the thickness of the Fe-based plated layer. The average value of the thicknesses in the three observation fields is multiplied by the specific gravity of iron to calculate the coating weight of the Fe-based plated layer per side.

Examples of the Fe-based electroplated layer include not only pure Fe but also alloy plated layers such as Fe-B alloy, Fe-C alloy, Fe-P alloy, Fe-N alloy, Fe-O alloy, Fe-Ni alloy, Fe-Mn alloy, Fe-Mo alloy, and Fe-W alloy. The chemical composition of the Fe-based electroplated layer is not limited, but preferably contains one or more elements selected from the group consisting of B, C, P, N, O, Ni, Mn, Mo, Zn, W, Pb, Sn, Cr, V, and Co in a total amount of 10 mass% or less, with the balance consisting of Fe and inevitable impurities. If the total content of elements other than Fe is 10 mass% or less, a decrease in electrolysis efficiency can be prevented and the Fe-based electroplated layer can be formed at low costs. In the case of Fe-C alloy, the C content is preferably 0.08 mass% or less.

The steel sheet as the base for hot-dip galvanizing may be the base steel sheet alone or the base steel sheet with the metal coated or plated layer, and is preferably the base steel sheet that includes the soft surface layer and has the metal coated or plated layer formed on its surface.

[1-3] Hot-dip galvanized layer

The hot-dip galvanized layer in the hot-dip galvanized steel sheet will be described. The hot-dip galvanized layer herein includes a galvannealed layer (a coated layer obtained by subjecting the hot-dip galvanized coating to alloying treatment). The hot-dip galvanized layer may be provided on the surface of the base steel sheet on both sides. In this case, the hot-dip galvanized layer may be formed directly on the surface of the base steel sheet. If the base steel sheet has the soft surface layer, the metal electroplated layer, etc. on its surface, the hot-dip galvanized layer may be formed on such layers.

The hot-dip galvanized layer typically contains Zn (zinc) as the main component (specifically, the Zn content is 50.0 mass% or more). The composition of the hot-dip galvanized layer is not limited and may be a known composition. For example, the hot-dip galvanized layer preferably contains Zn, 20.0 mass% or less of Fe, and 0.001 mass% or more and 1.0 mass% or less of Al. The hot-dip galvanized layer may optionally contain one or more elements selected from the group consisting of Pb, Sb, Si, Sn, Mg, Mn, Ni, Cr, Co, Ca, Cu, Li, Ti, Be, Bi, and REM in a total amount of more than 0.0 mass% and 3.5 mass% or less. The Fe content in the hot-dip galvanized layer is more preferably less than 7.0 mass%. The balance other than the foregoing elements consists of inevitable impurities.

The galvannealed layer preferably contains, for example, 20 mass% or less of Fe and 0.001 mass% or more and 1.0 mass% or less of Al. The galvannealed layer may optionally contain one or more elements selected from the group consisting of Pb, Sb, Si, Sn, Mg, Mn, Ni, Cr, Co, Ca, Cu, Li, Ti, Be, Bi, and REM in a total amount of more than 0 mass% and 3.5 mass% or less. The Fe content in the galvannealed layer is more preferably 7.0 mass% or more and further preferably 8.0 mass% or more. The Fe content in the galvannealed layer is more preferably 15.0 mass% or less and further preferably 12.0 mass% or less. The balance other than the foregoing elements consists of inevitable impurities.

The coating weight of the hot-dip galvanized layer per side is not limited, and may be, for example, 20 g/m$^2$ or more and 80 g/m$^2$ or less.

The coating weight of the galvanized layer is measured as follows. A treatment solution is prepared by adding 0.6 g of a corrosion inhibitor for Fe (IBIT® 700BK (IBIT is a registered trademark in Japan, other countries, or both) produced by Asahi Chemical Co., Ltd.) to 1 L of a 10 mass% hydrochloric acid aqueous solution. A sample of the steel sheet with the galvanized layer is then immersed in the treatment solution to dissolve the galvanized layer. The mass loss of the sample before and after dissolution is measured, and the value is divided by the surface area of base steel sheet (the surface area of the coated portion) to calculate the coating weight (g/m$^2$).

The hot-dip galvanized layer preferably has cracks. By intentionally providing cracks to the hot-dip galvanized layer, it is possible to further reduce the low-temperature-range diffusible hydrogen content of the base steel sheet.

Whether there is any crack in the hot-dip galvanized layer is determined as follows. The surface of the hot-dip galvanized layer (on the front and back sides) in the hot-dip galvanized steel sheet is observed using a SEM at 3000x magnification for two observation fields (one observation field: 30 $\mu$m × 40 $\mu$m) per side, i.e. four observation fields in total. If there is one or more cracks penetrating the hot-dip galvanized coating in any of the four observation fields, it is determined that there is at least one crack. If there is no crack penetrating the hot-dip galvanized coating in all of the four observation fields, it is determined that there is no crack.

[1-4] Others

The sheet thickness of the hot-dip galvanized steel sheet according to the present disclosure is not limited, and may be 0.3 mm or more and 3.0 mm or less.

[2] Production method for hot-dip galvanized steel sheet

Next, a production method for a hot-dip galvanized steel sheet according to the present disclosure (hereafter also referred to as the production method according to the present disclosure for the sake of convenience) will be described. The production method according to the present disclosure is a method of producing the above-described hot-dip galvanized steel sheet according to the present disclosure. Here, the temperatures in the production method are based on the surface temperature of the steel slab or steel sheet unless otherwise specified.

[2-1] Hot rolling process

The production method according to the present disclosure comprises a process of subjecting a steel slab having the chemical composition of the base steel sheet to hot rolling at a coiling temperature of 400 °C or more and 700 °C or less to obtain a hot-rolled steel sheet. The steel slab is not limited as long as it has the foregoing chemical composition. For example, the steel slab may be produced by melting steel material to obtain molten steel having the foregoing chemical composition and solidifying the obtained molten steel.

The steelmaking method is not limited, and any known steelmaking method such as converter or electric furnace may be used. The method of producing the steel slab from the molten steel is not limited, and any method such as continuous casting, ingot casting, or thin slab casting may be used. Continuous casting is preferable from the viewpoint of preventing macrosegregation.

After the steel slab is produced, the steel slab may be cooled to room temperature and then reheated, before rolling. The slab heating temperature is preferably 1100 °C or more from the viewpoint of melting carbides and reducing the rolling load. To prevent an increase of scale loss, the slab heating temperature is preferably 1300 °C or less. The slab heating temperature herein is the surface temperature of the slab.

In this process, an energy-saving process such as hot direct rolling or direct rolling may be used. Hot direct rolling is a process in which the produced steel slab as a warm slab is, without being cooled to room temperature, charged into a heating furnace and rolled. Direct rolling is a process in which the produced steel slab is subjected to a short period of heat retention and then immediately rolled.

The steel slab is hot rolled to obtain a hot-rolled steel sheet. The hot rolling may consist of rough rolling and finish rolling.

For example, the steel slab may be subjected to rough rolling to obtain a sheet bar. The rough rolling conditions may be known conditions.

The sheet bar may then be subjected to finish rolling. If the slab heating temperature is low, it is preferable to heat the sheet bar using a bar heater or the like before finish rolling from the viewpoint of preventing troubles during rolling. The finish rolling temperature is preferably not less than the $Ar_3$ transformation point. If the finish rolling temperature is excessively low, the rolling load increases or the rolling reduction ratio in the non-recrystallized state of austenite increases, so that abnormal microstructure extending in the rolling direction develops. This may cause a decrease in the workability of the steel sheet obtained after annealing. The $Ar_3$ transformation point is calculated using the following formula.

$Ar_3$ (°C) = 868 - 396 × [%C] + 24.6 × [%Si] - 68.1 × [%Mn] - 36.1 × [%Ni] - 20.7 × [%Cu] - 24.8 × [%Cr] where [% element symbol] represents the content (mass%) of the element in the foregoing chemical composition.

Finish rolling may be performed continuously with sheet bars joined together. The sheet bars may be temporarily coiled before finish rolling. Further, at least part of finish rolling may be conducted as lubrication rolling to reduce the rolling load. Conducting lubrication rolling is effective from the viewpoint of making the shape and material properties of the steel sheet uniform. In lubrication rolling, the frictional coefficient is preferably 0.10 or more. The frictional coefficient is preferably 0.25 or less.

In the hot rolling process, after the finish rolling, the hot-rolled steel sheet is coiled and recovered, and then cooled. It is particularly important to control the coiling temperature to 400 °C or more and 700 °C or less.

If the coiling temperature is 400 °C or more, solute C in the hot-rolled steel sheet can be reduced and the area ratio of ferrite having {001} orientation can be reduced during annealing after cold rolling, with it being possible to reduce anisotropy of stretch flange fracture. If the coiling temperature is more than 700 °C, coarse pearlite forms in the microstructure of the hot-rolled steel sheet and austenite nucleation sites during annealing decrease, as a result of which the fraction of martensite decreases and it is difficult to achieve the desired TS. The coiling temperature is therefore 400 °C or more and 700 °C or less. The coiling temperature is preferably 430 °C or more and more preferably 450 °C or more. The coiling temperature is preferably 670 °C or less and more preferably 650 °C or less.

The cooling conditions after coiling are not limited and known conditions may be used. For example, the cooling rate is preferably 0.001 °C/s or more. The cooling rate is preferably 1 °C/s or less. The cooling stop temperature is preferably 20 °C or more. The cooling stop temperature is preferably 200 °C or less.

[2-2] Pickling process

After the hot rolling process, the hot-rolled steel sheet is pickled. Pickling can remove oxides from the steel sheet surface, ensuring good chemical convertibility and coating or plating quality. Pickling may be performed in one or more batches. The pickling conditions are not limited and known conditions may be used.

[2-3] Heat treatment process (optional)

After the pickling process, the hot-rolled steel sheet may be subjected to heat treatment. By subjecting the hot-rolled steel sheet to heat treatment, fine carbides form uniformly in the steel microstructure of the hot-rolled steel sheet and the area ratio of martensite does not decrease, so that the decrease in TS can be prevented. From this viewpoint, the heat treatment temperature is preferably 450 °C or more. If the heat treatment temperature is more than 650 °C, carbides may coarsen spherically or coarse pearlite may form, causing a decrease in TS. The heat treatment temperature is therefore preferably 450 °C or more and 650 °C or less. The heat treatment temperature is more preferably 460 °C or more and further preferably 470 °C or more. The heat treatment temperature is more preferably 600 °C or less and further preferably 550 °C or less.

The residence time (holding time) in the heat treatment temperature range is not limited, but is preferably 10 minutes or more from the viewpoint of achieving the effect of the heat treatment process of preventing the decrease in TS because fine carbides form uniformly in the steel microstructure of the hot-rolled steel sheet and the area ratio of martensite does not decrease. The residence time in the heat treatment temperature range is more preferably 100 minutes or more and further preferably 500 minutes or more. Although no upper limit is placed on the residence time, the residence time is preferably 3000 minutes or less and more preferably 2000 minutes or less from the viewpoint of uniformly forming fine carbides in the steel microstructure of the hot-rolled steel sheet.

[2-4] Cold rolling process

The hot-rolled steel sheet after the hot rolling process or the hot-rolled steel sheet after the hot rolling process and the heat treatment process is subjected to cold rolling to obtain a cold-rolled steel sheet. Here, it is important to satisfy the following conditions.

[Total rolling reduction ratio: 40 % or more]

By increasing the total rolling reduction ratio in cold rolling from the sheet thickness of the steel slab to the final sheet thickness of the cold-rolled steel sheet, it is possible to reduce the area ratio of ferrite having {001} orientation during annealing and thus reduce anisotropy of stretch flange fracture. The total rolling reduction ratio in cold rolling to the final sheet thickness is therefore 40 % or more. The total rolling reduction ratio is preferably 45 % or more and more preferably 50 % or more. Although no upper limit is placed on the total rolling reduction ratio, the total rolling reduction ratio is preferably 90 % or less and more preferably 85 % or less due to production technology constraints.

The final sheet thickness of the cold-rolled steel sheet can be set depending on the sheet thickness of the hot-dip galvanized steel sheet, and may be, for example, 0.3 mm or more and 3.0 mm or less.

[Number of passes from cumulative rolling reduction ratio of 30 % or more to total rolling reduction ratio: 2 or more]

By increasing the number of passes from when a cumulative rolling reduction ratio of 30 % or more is reached to when the final sheet thickness is reached, it is possible to reduce the area ratio of ferrite having {001} orientation during annealing and thus reduce anisotropy of stretch flange fracture. The number of passes from the cumulative rolling reduction ratio of 30 % or more to the total rolling reduction ratio is therefore 2 or more, preferably 3 or more, and more preferably 4 or more. Although no upper limit is placed on the number of passes from the cumulative rolling reduction ratio of 30 % or more to the total rolling reduction ratio, the number of passes is preferably 100 or less and more preferably 50 or less due to production technology constraints.

Herein, the number of passes from the cumulative rolling reduction ratio of 30 % or more to the total rolling reduction ratio refers to the number of passes from the first pass to the final pass (including the first and final passes) where the first pass is the pass at which a cumulative rolling reduction ratio of 30 % or more is reached for the first time and the final pass is the pass at which the final sheet thickness is reached.

Other cold rolling conditions are not limited and known conditions may be used. For example, cold rolling may be performed by tandem multi-stand rolling or reverse rolling. The total number of passes from the sheet thickness of the steel slab to the final sheet thickness and the rolling reduction ratio of each pass are not limited and known conditions may be used.

[2-5] Metal coating or plating treatment process (optional)

The surface of the cold-rolled steel sheet obtained as described above may be subjected to metal coating or plating treatment to obtain a pre-annealing metal coated or plated steel sheet having a metal coated or plated layer (pre-annealing metal coated or plated layer) formed on at least one side. The pre-annealing metal coated or plated steel sheet is preferably a pre-annealing metal electroplated steel sheet including a pre-annealing metal electroplated layer.

The metal coating or plating treatment method is not limited, but it is preferable to perform metal electroplating treatment because the metal coated or plated layer formed on the base steel sheet is preferably a metal electroplated layer as mentioned above. For example, a sulfuric acid bath, a hydrochloric acid bath, or a mixture thereof may be used as a Fe-based electroplating bath. The coating weight of the pre-annealing metal electroplated layer can be adjusted by the current passage time, etc. The "pre-annealing metal electroplated steel sheet" means that the metal electroplated layer has not been subjected to an annealing process, and does not exclude the case where the hot-rolled steel sheet, hot-rolled and pickled sheet, or cold-rolled steel sheet before the metal electroplating treatment has been annealed in advance.

The metal species of the electroplated layer may be any of Al, Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, but is preferably Fe. Hence, a method of Fe-based electroplating will be described below.

The Fe ion content in the Fe-based electroplating bath before current passage start is preferably 0.5 mol/L or more as $Fe^{2+}$ content. If the Fe ion content in the Fe-based electroplating bath is 0.5 mol/L or more as $Fe^{2+}$ content, sufficient Fe coating weight can be obtained. The Fe ion content in the Fe-based electroplating bath before current passage start is preferably 2.0 mol/L or less, in order to obtain sufficient Fe coating weight.

The Fe-based electroplating bath may contain at least one element selected from the group consisting of B, C, P, N, O, Ni, Mn, Mo, Zn, W, Pb, Sn, Cr, V, and Co, in addition to Fe ion. The total content of these elements in the Fe-based electroplating bath is preferably set so that the total content of these elements in the pre-annealing Fe-based electroplated layer will be 10 mass% or less. A metal element may be contained as a metal ion, and a non-metal element may be contained as part of boric acid, phosphoric acid, nitric acid, organic acid, and the like. An iron sulfate plating solution may contain a conductivity aid such as sodium sulfate or potassium sulfate, a chelator, and a pH buffering agent.

The other conditions for the Fe-based electroplating bath are not limited. The temperature of the Fe-based electroplating solution is preferably 30 °C or more and preferably 85 °C or less, from the viewpoint of holding at constant temperature. The pH of the Fe-based electroplating bath is not limited. The pH of the Fe-based electroplating bath is preferably 1.0 or more from the viewpoint of preventing a decrease in current efficiency due to hydrogen generation. The pH of the Fe-based electroplating bath is preferably 3.0 or less from the viewpoint of the electric conductivity of the Fe-based electroplating bath. The current density is preferably 10 A/dm$^2$ or more from the viewpoint of productivity. The current density is preferably 150 A/dm$^2$ or less from the viewpoint of easily controlling the coating weight of the Fe-based electroplated layer. The sheet passing speed is preferably 5 mpm or more from the viewpoint of productivity. The sheet passing speed is preferably 150 mpm or less from the viewpoint of stably controlling the coating weight.

Examples of treatment that may be performed prior to the Fe-based electroplating treatment include degreasing treatment and water washing for cleaning the surface of the cold-rolled steel sheet, and pickling treatment and water washing for activating the surface of the cold-rolled steel sheet. Such preliminary treatment is followed by the Fe-based electroplating treatment. The method of degreasing treatment and water washing is not limited, and may be a typical method.

In the pickling treatment, any of various types of acids such as sulfuric acid, hydrochloric acid, nitric acid, and mixtures thereof may be used. Of these, sulfuric acid, hydrochloric acid, or a mixture thereof is preferable. The acid concentration is not limited, but is preferably 1 mass% or more and 20 mass% or less from the viewpoint of, for example, the oxide coating removal ability and the prevention of surface roughening (surface defects) caused by excessive pickling.

The pickling treatment solution may contain a defoamer, a pickling accelerator, a pickling inhibitor, and the like.

[2-6] Annealing process

The cold-rolled steel sheet obtained as described above is subjected to annealing. The cold-rolled steel sheet may or may not have undergone metal coating or plating treatment. It is important to satisfy the following conditions during annealing.

[Average heating rate in temperature range of 250 °C or more and 600 °C or less: 1 °C/s or more and 100 °C/s or less]

By reducing the average heating rate in the heating temperature range during annealing, it is possible to reduce the area ratio of ferrite having {001} orientation during annealing. Thus, anisotropy of stretch flange fracture can be reduced. The average heating rate in the temperature range of 250 °C or more and 600 °C or less is therefore 100 °C/s or less. If the average heating rate in the temperature range of 250 °C or more and 600 °C or less is less than 1.0 °C/s, the fraction of martensite decreases, making it difficult to achieve the desired TS. The average heating rate in the temperature range of 250 °C or more and 600 °C or less is therefore 1.0 °C/s or more. Hence, the average heating rate in the temperature range of 250 °C or more and 600 °C or less is 1.0 °C/s or more and 100 °C/s or less. The average heating rate is preferably 3.0 °C/s or more and more preferably 5.0 °C/s or more. The average heating rate is preferably 80 °C/s or less and more preferably 50 °C/s or less.

[Annealing temperature: 750 °C or more and 900 °C or less]

The cold-rolled steel sheet is heated to an annealing temperature of 750 °C or more and 900 °C or less. If the annealing temperature is 750 °C or less, the fraction of austenite during annealing cannot be sufficiently secured, and as a result the area ratio of martensite decreases, making it difficult to achieve the desired TS. If the annealing temperature is more than 900 °C, annealing occurs in the austenite single phase region, so that the area ratio of ferrite decreases, making it difficult to achieve the desired ductility. In addition, the low-temperature-range diffusible hydrogen content in the base steel sheet increases, making it difficult to achieve the desired ductility, stretch flangeability, bendability, and anisotropy of stretch flange fracture. The annealing temperature is therefore 750 °C or more and 900 °C or less. The annealing temperature is preferably 770 °C or more and more preferably 780 °C or more. The annealing temperature is preferably 880 °C or less and more preferably 860 °C or less.

The heat retention time at the annealing temperature (hereafter also referred to as the annealing time) is not limited, but is preferably 10 seconds or more and 600 seconds or less from the viewpoint of controlling the area ratios of ferrite and martensite in the base steel sheet within the specified ranges.

The average heating rate from above 600 °C to the annealing temperature may be 0.5 °C/s, and is preferably 1.0 °C/s.

[Dew point of annealing atmosphere in annealing process: -25 °C or more (preferred condition)]

The dew point of the annealing atmosphere in the annealing process is preferably -25 °C or more. If the dew point of the annealing atmosphere in the annealing process is -25 °C or more, the decarburization reaction is promoted and the soft surface layer can be formed deeper. The dew point of the annealing atmosphere in the annealing process is more preferably -15 °C or more and further preferably -5 °C or more. Although no upper limit is placed on the dew point of the annealing atmosphere in the annealing process, the dew point of the annealing atmosphere is preferably 30 °C or less from the viewpoint of improving coating adhesion when the hot-dip galvanized layer is provided. If the dew point is in this range, oxidation of the plated layer surface can be appropriately prevented for cold-rolled steel sheets including a Fe-based electroplated layer.

[2-7] Cooling process after annealing

After the foregoing annealing, the cold-rolled steel sheet is cooled. The cooling conditions are not limited, and known conditions may be used. For example, the average cooling rate in the temperature range from the annealing temperature to 500 °C is not limited, but is preferably 3 °C/s or more and 50 °C/s or less from the viewpoint of controlling the area ratios of ferrite and martensite in the base steel sheet within the specified ranges.

The average cooling rate in the temperature range below 500 °C is not limited, but is preferably 1 °C/s or more and 30 °C/s or less from the viewpoint of controlling the area ratio of martensite within the preferred range.

[2-8] Coating treatment process

The cold-rolled steel sheet is subjected to hot-dip galvanizing treatment. After the hot-dip galvanizing treatment, alloying treatment may be performed.

The hot-dip galvanizing treatment may be performed in the temperature range of the foregoing annealing temperature or less and 400 °C or more. The hot-dip galvanizing treatment may be performed after cooling the cold-rolled steel sheet to less than 400 °C and then increasing the steel sheet temperature again to 400 °C or more.

The annealing, cooling, and hot-dip galvanizing treatments may be performed continuously in one line (continuous galvanizing line (CGL)).

For example, after annealing, the cold-rolled steel sheet is cooled to a temperature range of about 500 °C. The cold-rolled steel sheet is then passed through the steel strip exit side of the cooling zone, and further cooled while being moved to a hot-dip galvanizing bath through a snout whose tip is immersed in the hot-dip galvanizing bath. The time from the end of cooling the cold-rolled steel sheet to its entry into the hot-dip galvanizing bath is not limited, but is preferably 300 seconds or less from the viewpoint of controlling the area ratios of ferrite and martensite within the specified ranges. Rolls are provided immediately before the connection between the cooling zone and the snout to change the direction of travel of the cold-rolled steel sheet to enter the snout so that the cold-rolled steel sheet will enter the snout after passing the rolls, and then the cold-rolled steel sheet is led to the hot-dip galvanizing bath through the snout and immersed in the hot-dip galvanizing bath to perform hot-dip galvanizing treatment, thus producing a coated steel sheet.

The conditions for the hot-dip galvanizing treatment are not limited. For example, the cold-rolled steel sheet may be immersed in a hot-dip galvanizing bath at 440 °C or more and 500 °C or less. It is preferable to use a hot-dip galvanizing bath having a composition in which the Al content is 0.10 mass% or more and 0.23 mass% or less with the balance consisting of Zn and inevitable impurities. The hot-dip galvanizing bath may further contain at least one selected from the group consisting of Pb, Sb, Si, Sn, Mg, Mn, Ni, Cr, Co, Ca, Cu, Li, Ti, Be, Bi, and REM in a total amount of 0 mass% or more and 3.5 mass% or less. The hot-dip galvanizing bath may contain Fe dissolved from the steel sheet.

The hot-dip galvanizing treatment is preferably performed so that the coating weight of the hot-dip galvanized steel sheet (GI) per side will be 20 g/m$^2$ or more and 80 g/m$^2$ or less. The coating weight can be adjusted by performing gas wiping or the like after the hot-dip galvanizing treatment.

After the hot-dip galvanizing treatment, alloying treatment may be performed. If the alloying treatment temperature is less than 460 °C, the Zn-Fe alloying rate is excessively slow, which may cause lower productivity. If the alloying treatment temperature is more than 600 °C, untransformed austenite transforms into pearlite, which may cause decreases in TS and El. The alloying treatment temperature is therefore preferably 460 °C or more and 600 °C or less. The alloying treatment temperature is preferably 470 °C or more. The alloying treatment temperature is preferably 560 °C or less.

The Fe concentration in the galvannealed layer after the alloying treatment is preferably 7 mass% or more. The Fe concentration in the galvannealed layer is preferably 15 mass% or less. The Fe concentration in the galvannealed layer is more preferably 8 mass% or more. The Fe concentration in the galvannealed layer is more preferably 13 mass% or less.

[2-9] Cooling process after coating treatment

After the coating treatment (hot-dip galvanizing treatment, or hot-dip galvanizing treatment and alloying treatment), the coated steel sheet is cooled.

The cooling conditions are not limited, and known conditions may be used. For example, the average cooling rate to the cooling stop temperature after the end of the hot-dip galvanizing treatment or alloying treatment is not limited, but is preferably 2 °C/s or more and more preferably 5 °C/s or more from the viewpoint of further improving TS, and preferably 50 °C/s or less and more preferably 40 °C/s or less due to production technology constraints. The cooling method is not limited, and gas jet cooling, mist cooling, water cooling, air cooling, etc. may be used.

[Heat retention temperature in cooling of coated steel sheet: 100 °C or more and 450 °C or less (preferred condition)]

In the cooling of the coated steel sheet, the coated steel sheet may be kept in the temperature range of 100 °C or more and 450 °C or less for 5 seconds or more and then cooled. Such heat retention in the cooling of the coated steel sheet promotes hydrogen desorption from the coated steel sheet and reduces the low-temperature-range diffusible hydrogen content of the base steel sheet. The heat retention temperature in the cooling of the coated steel sheet is therefore preferably 100 °C or more. If the heat retention temperature in the cooling of the coated steel sheet is more than 450 °C, the area ratio of martensite decreases and TS decreases. The heat retention temperature in the cooling of the coated steel sheet is therefore preferably 100 °C or more and 450 °C or less. The heat retention temperature in the cooling of the coated steel sheet is more preferably 130 °C or more and further preferably 150 °C or more. The heat retention temperature in the cooling of the coated steel sheet is more preferably 400 °C or less and further preferably 350 °C or less.

[Heat retention time in cooling of coated steel sheet: 5 seconds or more (preferred condition)]

The heat retention time in the cooling of the coated steel sheet is preferably 5 seconds or more, more preferably 10 seconds or more, and further preferably 15 seconds or more from the viewpoint of effectively reducing the low-temperature-range diffusible hydrogen content of the base steel sheet by heat retention. Although no upper limit is placed on the heat retention time in the cooling of the coated steel sheet, the heat retention time in the cooling of the coated steel sheet is preferably 300 seconds or less and more preferably 100 seconds or less from the viewpoint of controlling the area ratios of ferrite and martensite in the base steel sheet within the specified ranges.

[Cooling stop temperature in cooling of coated steel sheet: 300 °C or less (preferred condition)]

In the cooling of the coated steel sheet, cooling the coated steel sheet to a cooling stop temperature not more than the martensitic transformation start temperature and then reheating the coated steel sheet promotes hydrogen desorption from the coated steel sheet and reduces the low-temperature-range diffusible hydrogen content of the base steel sheet. From this viewpoint, the cooling stop temperature in the cooling of the coated steel sheet is preferably 300 °C or less, more preferably 250 °C or less, and further preferably 150 °C or less. Although no lower limit is placed on the cooling stop temperature in the cooling of the coated steel sheet, the cooling stop temperature in the cooling of the coated steel sheet is preferably 10 °C or more and more preferably 30 °C or more due to production technology constraints.

[Reheating temperature of coated steel sheet: (cooling stop temperature + 50 °C) or more and 450 °C or less (preferred condition)]

Reheating the coated steel sheet after the cooling stop temperature is reached promotes hydrogen desorption from the coated steel sheet and reduces the low-temperature-range diffusible hydrogen content of the base steel sheet. From this viewpoint, the reheating temperature of the coated steel sheet is preferably (cooling stop temperature + 50 °C) or more. If the reheating temperature of the coated steel sheet is more than 450 °C, the area ratio of martensite decreases and TS decreases. The reheating temperature of the coated steel sheet is therefore preferably (cooling stop temperature + 50 °C) or more and 450 °C or less. The reheating temperature of the coated steel sheet is more preferably (cooling stop temperature + 80 °C) or more and further preferably (cooling stop temperature + 100 °C) or more. The reheating temperature of the coated steel sheet is more preferably 400 °C or less and further preferably 350 °C or less.

[Heat retention time at reheating temperature of coated steel sheet: 5 seconds or more (preferred condition)]

Heat retention at the reheating temperature promotes hydrogen desorption from the coated steel sheet and reduces the low-temperature-range diffusible hydrogen content of the base steel sheet. From this viewpoint, the heat retention time at the reheating temperature of the coated steel sheet is preferably 5 seconds or more, more preferably 10 seconds or more, and further preferably 15 seconds or more. Although no upper limit is placed on the heat retention time at the reheating temperature of the coated steel sheet, the heat retention time at the reheating temperature of the coated steel sheet is preferably 300 seconds or less and more preferably 100 seconds or less from the viewpoint of controlling the area ratios of ferrite and martensite in the base steel sheet within the specified ranges.

[Rolling after cooling: elongation rate of 0.05 % or more and 1.00 % or less (preferred process and condition)]

After cooling, it is preferable to roll the coated steel sheet with an elongation rate of 0.05 % or more and 1.00 % or less. If the elongation rate in the rolling after cooling is 0.05 % or more, cracks can be introduced into the hot-dip galvanized layer and as a result further reduction in the low-temperature-range diffusible hydrogen content of the base steel sheet can be expected. If the elongation rate in the rolling after cooling is more than 1.00 %, the area ratio of ferrite having {001} orientation increases, which may cause degradation in anisotropy of stretch flange fracture. The elongation rate in the rolling after cooling is therefore preferably 0.05 % or more and 1.00 % or less. The elongation rate in the rolling after cooling is more preferably 0.10 % or more. The elongation rate in the rolling after cooling is more preferably 0.50 % or less.

The rolling after cooling may be performed by a device continuous with the continuous hot-dip galvanizing device (i.e. online), or performed by a device not continuous with the continuous hot-dip galvanizing device (i.e. offline). The rolling may be performed once to achieve the target elongation rate, or performed a plurality of times to achieve the elongation rate of 0.05 % or more and 1.00 % or less in total. The rolling mentioned herein typically denotes temper rolling, but may be rolling by a processing method such as repeated bending with a tension leveler or rolls as long as the same elongation rate as in temper rolling can be achieved.

Rolling treatment may be performed after the coated steel sheet is cooled to near room temperature. Alternatively, rolling treatment may be performed when the cooling of the coated steel sheet stops, followed by reheating treatment.

In the case of trading the hot-dip galvanized steel sheet, the hot-dip galvanized steel sheet is usually cooled to room temperature before being traded.

The production conditions other than those described above are not limited and known conditions may be used.

[3] Member and production method therefor

A member according to the present disclosure and a production method therefor will be described.

The member according to the present disclosure is a member produced using the above-described hot-dip galvanized steel sheet according to the present disclosure. For example, the member can be produced by forming the hot-dip galvanized steel sheet according to the present disclosure into the desired shape by press working or the like.

The hot-dip galvanized steel sheet according to the present disclosure is a high-strength hot-dip galvanized steel sheet having high ductility, high stretch flangeability and bendability, and reduced anisotropy of stretch flange fracture. Hence, the use of the hot-dip galvanized steel sheet according to the present disclosure or the member produced using the hot-dip galvanized steel sheet for, for example, automotive framework structural components or automotive reinforcing components can make the automotive body more lightweight to improve fuel efficiency. The presently disclosed technology thus has very high industrial value.

EXAMPLES

The presently disclosed technology will be described in more detail below by way of examples, although the present disclosure is not limited to these examples.

[Test Nos. 1 to 39]

Steel slabs (steel materials) having the chemical compositions shown in Table 1 with the balance consisting of Fe and inevitable impurities were obtained by steelmaking using a converter and continuous casting. The obtained steel slabs were each heated to 1250 °C and subjected to rough rolling to obtain a sheet bar. The obtained sheet bar was then subjected to finish rolling at a finish rolling temperature of 900 °C and coiled under the conditions shown in Table 2 to obtain a hot-rolled steel sheet. The obtained hot-rolled steel sheet was pickled and then subjected to cold rolling under the conditions shown in Table 2 to obtain a cold-rolled steel sheet with a sheet thickness of 1.4 mm.

The obtained cold-rolled steel sheet was annealed under the conditions shown in Table 2. Next, the cold-rolled steel sheet was subjected to the type of coating treatment shown in Table 2 to obtain a coated steel sheet having a hot-dip galvanized layer on both sides.

Regarding the coating treatment types in Table 2, GI means performing only hot-dip galvanizing treatment without alloying treatment, and GA means performing hot-dip galvanizing treatment and alloying treatment.

In GI, a hot-dip galvanizing bath containing Al: 0.20 mass% with the balance consisting of Zn and inevitable impurities was used as the molten bath. In GA, a hot-dip galvanizing bath containing Al: 0.14 mass% with the balance consisting of Zn and inevitable impurities was used as the molten bath. The molten bath temperature was 470 °C in both cases.

The coating weight was about 45 $g/m^2$ to 72 $g/m^2$ per side in GI, and about 45 $g/m^2$ (double-sided coating) in GA. Coating treatment was performed on both sides in both cases. In GA, the alloying treatment temperature was about 550 °C.

The composition of the hot-dip galvanized layer in GI was Fe: 0.1 mass% to 1.0 mass% and Al: 0.2 mass% to 1.0 mass% with the balance consisting of Zn and inevitable impurities. The composition of the (alloyed) hot-dip galvanized layer in GA was Fe: 7 mass% to 15 mass% and Al: 0.1 mass% to 1.0 mass% with the balance consisting of Zn and inevitable impurities.

Next, some of the coated steel sheets were subjected to heat retention treatment or to reheating treatment after cooling under the conditions shown in Table 2. Conditions not specified were in accordance with conventional methods.

For each of the hot-dip galvanized steel sheets thus obtained, the microstructure at the position of 1/4 of the sheet thickness of the base steel sheet was identified and the proportion of the area ratio of ferrite having {001} orientation to the area ratio of all ferrite (area ratio of ferrite having {001} orientation/area ratio of all ferrite) and the low-temperature-range diffusible hydrogen content of the base steel sheet were measured by the above-described methods. The results are shown in Table 3.

The chemical composition of the base steel sheet in each obtained steel sheet was substantially the same as the chemical composition at the steel slab stage. All conforming steels were within the range of the chemical composition according to the present disclosure, whereas all comparative steels were outside the range of the chemical composition according to the present disclosure.

For each of the obtained hot-dip galvanized steel sheets, tensile property, stretch flangeability, anisotropy of stretch flange fracture, and bendability were evaluated using the following test methods. The results are shown in Table 3.

[Tensile test]

A tensile test was conducted in accordance with JIS Z 2241. In detail, a **JIS** No. 5 test piece was collected from the obtained hot-dip galvanized steel sheet so that the direction (C direction) orthogonal to the rolling direction of the steel sheet would be the longitudinal direction. Next, a tensile test was conducted using the collected test piece at a crosshead speed of $1.67 \times 10^{-1}$ mm/s to measure YS, TS, and El. For TS, a TS of 780 MPa or more was determined as pass. Moreover, the product of TS and El (TS $\times$ El) was calculated from the measured TS and El. A TS $\times$ El of 13000 MPa·% or more was determined as pass.

[Hole expanding test]

A hole expanding test was conducted in accordance with JIS Z 2256. In detail, the obtained hot-dip galvanized steel sheet was sheared into a size of 100 mm $\times$ 100 mm, and then a hole with a diameter of 10 mm was drilled through the sheared steel sheet with clearance 12.5 %. Next, in a state in which the steel sheet was clamped using a die having an inner diameter of 75 mm with a blank holding force of 9 tons (88.26 kN), a conical punch with an apical angle of 60° was pushed into the hole and the hole diameter at crack initiation limit was measured. The (maximum) hole expansion ratio (%) was calculated using the following formula.

$$\text{(Maximum) hole expansion ratio: } \lambda \ (\%) = \{(D_f - D_0)/D_0\} \times 100$$

where $D_f$ is the hole diameter at the time of crack initiation (mm), and $D_0$ is the initial hole diameter (mm). The (maximum) hole expansion ratio was measured for three sheared steel sheets, and the average value was taken as $\lambda$. The stretch

flangeability was determined as pass if λ was 30 % or more.

In the hole expanding test, the direction of crack initiation and the number of cracks at the time of crack initiation were evaluated. The crack initiation direction is classified into five directions: the rolling direction of the steel sheet (L direction), a direction at 45 degrees to the rolling direction of the steel sheet (D direction), a direction orthogonal to the rolling direction of the steel sheet (C direction), LD direction between L and D, and DC direction between D and C. The number of cracks in each direction was also evaluated, with one crack in the same direction counting as one crack in the direction, and two cracks in the same direction counting as two cracks in the direction. The crack initiation rate in each direction was then calculated using the following formulas (1) to (3).

Crack initiation rate in L direction (%) = {Number of cracks in L direction + (Number of cracks in LD direction)/2}/(Total number of cracks) × --> 100    (1)

Crack initiation rate in D direction (%) = {(Number of cracks in LD direction)/2 + Number of cracks in D direction + (Number of cracks in DC direction)/2}/(Total number of cracks) × 100    (2)

Crack initiation rate in C direction = {(Number of cracks in DC direction)/2 + Number of cracks in C direction}/(Total number of cracks) × 100    (3)

If the crack initiation rate in each of L, D, and C directions was 60 % or less, it was determined that anisotropy of stretch flange fracture was reduced, that is, the sample was determined as pass.

[Bend test]

A bend test was conducted in accordance with JIS Z 2248. A strip test piece of 30 mm in width and 100 mm in length was collected from the obtained hot-dip galvanized steel sheet so that the axial direction of the bend test would be parallel to the rolling direction of the steel sheet (L direction). A 90° V bend test was then conducted with an indentation load of 100 kN and a press holding time of 5 seconds. Bendability was evaluated by the pass rate of the bend test. The bend test was conducted on five samples at the maximum R where the value R/t obtained by dividing the bending radius (R) by the sheet thickness (t) was 5 or less (for example, the bending radius is 7.0 mm when the sheet thickness is 1.4 mm). Next, whether cracks occurred in the ridge line part of the bending apex was evaluated. Bendability was determined as excellent if none of the five samples cracked, determined as good if microfissure of less than 200 μm occurred in one or more of the five samples, and determined as poor if microfissure of 200 μm or more occurred in one or more of the five samples. Here, whether cracks occurred was evaluated by measuring the ridge line part of the bending apex with a digital microscope (RH-2000 produced by HIROX Co., Ltd.) at 40x magnification.

Table 1

| Steel sample ID | Chemical composition (mass%) | | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|---|
| | C | Si | Mn | P | S | Al | N | O | Ti | Nb | V | Ta | W | B | Cr | Mo | Ni | Co | Cu | Sn | Sb | Ca | Mg | REM | Zr | Te | Hf | Bi | |
| A | 0.089 | 0.55 | 2.75 | 0.005 | 0.0047 | 0.049 | 0.0048 | 0.0006 | - | - | - | - | - | - | - | - | - | - | - | - | - | - | - | - | - | - | - | - | Conforming steel |
| B | 0.129 | 0.55 | 2.40 | 0.029 | 0.0029 | 0.032 | 0.0046 | 0.0011 | - | - | - | - | - | - | - | - | - | - | - | - | - | - | - | - | - | - | - | - | Conforming steel |
| C | 0.075 | 0.19 | 2.40 | 0.024 | 0.0014 | 0.048 | 0.0030 | 0.0010 | - | - | - | - | - | - | - | - | - | - | - | - | - | - | - | - | - | - | - | - | Conforming steel |
| D | 0.130 | 0.58 | 2.42 | 0.021 | 0.0002 | 0.025 | 0.0037 | 0.0004 | - | - | - | - | - | - | - | - | - | - | - | - | - | - | - | - | - | - | - | - | Conforming steel |
| E | $\underline{0.025}$ | 0.24 | 2.27 | 0.026 | 0.0034 | 0.030 | 0.0044 | 0.0003 | - | - | - | - | - | - | - | - | - | - | - | - | - | - | - | - | - | - | - | - | Comparative steel |
| F | 0.069 | $\underline{2.56}$ | 2.39 | 0.015 | 0.0016 | 0.038 | 0.0043 | 0.0009 | - | - | - | - | - | - | - | - | - | - | - | - | - | - | - | - | - | - | - | - | Comparative steel |
| G | 0.071 | 0.21 | $\underline{0.07}$ | 0.045 | 0.0006 | 0.027 | 0.0039 | 0.0010 | - | - | - | - | - | - | - | - | - | - | - | - | - | - | - | - | - | - | - | - | Comparative steel |
| H | 0.056 | 0.08 | $\underline{5.08}$ | 0.021 | 0.0027 | 0.038 | 0.0041 | 0.0009 | - | - | - | - | - | - | - | - | - | - | - | - | - | - | - | - | - | - | - | - | Comparative steel |
| I | 0.081 | 0.57 | 2.64 | 0.021 | 0.0011 | 0.045 | 0.0028 | 0.0007 | 0.033 | - | - | - | - | - | - | - | - | - | - | - | - | - | - | - | - | - | - | - | Conforming steel |
| J | 0.090 | 0.59 | 2.72 | 0.007 | 0.0020 | 0.021 | 0.0039 | 0.0006 | - | 0.035 | - | - | - | - | - | - | - | - | - | - | - | - | - | - | - | - | - | - | Conforming steel |
| K | 0.088 | 0.57 | 2.74 | 0.024 | 0.0038 | 0.021 | 0.0045 | 0.0021 | - | - | 0.019 | - | - | - | - | - | - | - | - | - | - | - | - | - | - | - | - | - | Conforming steel |
| L | 0.081 | 0.57 | 2.66 | 0.036 | 0.0038 | 0.030 | 0.0049 | 0.0009 | - | - | - | 0.033 | 0.06 | - | - | - | - | - | - | - | - | - | - | - | - | - | - | - | Conforming steel |
| M | 0.055 | 0.24 | 2.33 | 0.038 | 0.0002 | 0.035 | 0.0028 | 0.0007 | - | 0.009 | - | 0.037 | - | - | - | - | - | - | - | - | - | - | - | - | - | - | - | - | Conforming steel |
| N | 0.099 | 0.59 | 2.70 | 0.045 | 0.0025 | 0.031 | 0.0040 | 0.0004 | 0.024 | - | - | - | - | 0.0032 | - | - | - | - | - | - | - | - | - | - | - | - | - | - | Conforming steel |
| O | 0.071 | 0.24 | 2.39 | 0.011 | 0.0023 | 0.028 | 0.0034 | 0.0005 | - | - | - | - | - | - | 0.42 | - | - | - | - | - | - | - | - | - | - | - | - | - | Conforming steel |
| P | 0.090 | 0.56 | 2.65 | 0.029 | 0.0019 | 0.026 | 0.0036 | 0.0009 | - | - | - | - | - | - | - | 0.07 | - | - | - | - | - | - | - | - | - | - | - | - | Conforming steel |
| Q | 0.067 | 0.15 | 2.24 | 0.007 | 0.0010 | 0.038 | 0.0050 | 0.0005 | - | - | - | - | - | - | - | - | 0.15 | - | - | - | - | - | - | - | - | - | - | - | Conforming steel |
| R | 0.093 | 0.69 | 2.67 | 0.046 | 0.0023 | 0.026 | 0.0039 | 0.0005 | - | - | - | - | - | - | - | - | - | 0.005 | - | - | - | - | - | - | - | - | - | - | Conforming steel |
| S | 0.095 | 0.63 | 2.68 | 0.039 | 0.0028 | 0.049 | 0.0035 | 0.0010 | - | - | - | - | - | - | - | - | - | - | 0.17 | - | - | - | - | - | - | - | - | - | Conforming steel |
| T | 0.084 | 0.59 | 2.71 | 0.028 | 0.0044 | 0.034 | 0.0043 | 0.0006 | - | - | - | - | - | - | - | - | - | - | - | 0.021 | - | - | - | - | - | - | - | - | Conforming steel |
| U | 0.124 | 0.41 | 2.56 | 0.011 | 0.0045 | 0.037 | 0.0035 | 0.0004 | - | - | - | - | - | - | - | - | - | - | - | - | 0.012 | - | - | - | - | - | - | - | Conforming steel |
| V | 0.089 | 0.55 | 2.70 | 0.022 | 0.0042 | 0.033 | 0.0048 | 0.0007 | - | - | - | - | - | - | - | - | - | - | - | - | - | 0.0014 | - | - | - | - | - | - | Conforming steel |
| W | 0.096 | 0.62 | 2.70 | 0.006 | 0.0017 | 0.041 | 0.0028 | 0.0009 | - | - | - | - | - | - | - | - | - | - | - | - | - | - | 0.0002 | 0.0009 | - | - | - | - | Conforming steel |
| X | 0.070 | 0.09 | 2.28 | 0.011 | 0.0014 | 0.033 | 0.0044 | 0.0005 | - | - | - | - | - | - | - | - | - | - | - | - | - | - | - | - | 0.035 | - | - | - | Conforming steel |
| Y | 0.087 | 0.65 | 2.78 | 0.022 | 0.0008 | 0.027 | 0.0027 | 0.0007 | - | - | - | - | - | - | - | - | - | - | - | - | - | - | - | - | - | 0.009 | 0.08 | 0.009 | Conforming steel |

Underlines indicate outside the range.

## [Table 2]

Table 2

| No. | Steel sample ID | Hot rolling process | Cold rolling process | | Annealing process | | Cooling process | | | Reheating process | | Coating treatment condition | Remarks |
|---|---|---|---|---|---|---|---|---|---|---|---|---|---|
| | | Coiling temperature | Total rolling reduction ratio | Number of passes from 30% or more to total rolling reduction ratio | Average heating rate from 250°C to 600°C | Annealing temperature | Heat retention temperature | Heat retention time | Cooling stop temperature | Reheating temperature | Heat retention time at reheating temperature | Type | |
| | | (°C) | (%) | (pass) | (°C/s) | (°C) | (°C) | (s) | (°C) | (°C) | (s) | | |
| 1 | A | 550 | 50 | 3 | 20 | 790 | - | - | Room temperature | - | - | GA | Example |
| 2 | A | 550 | 50 | 3 | 20 | 790 | 150 | 70 | Room temperature | - | - | GA | Example |
| 3 | A | 550 | 50 | 3 | 20 | 790 | - | - | 50 | 200 | 50 | GA | Example |
| 4 | B | 500 | 50 | 4 | 20 | 820 | - | - | Room temperature | - | - | GA | Example |
| 5 | B | 500 | 50 | 4 | 20 | 820 | 200 | 100 | Room temperature | - | - | GA | Example |
| 6 | B | 500 | 50 | 4 | 20 | 820 | - | - | Room temperature | 300 | 70 | GA | Example |
| 7 | C | 600 | 60 | 4 | 20 | 780 | - | - | Room temperature | - | - | GA | Example |
| 8 | C | 600 | 60 | 4 | 20 | 780 | 150 | 150 | Room temperature | - | - | GA | Example |
| 9 | C | 600 | 60 | 4 | 20 | 780 | - | - | Room temperature | 200 | 40 | GA | Example |
| 10 | C | <u>350</u> | 60 | 4 | 20 | 780 | - | - | Room temperature | - | - | GA | Comparative Example |
| 11 | C | <u>750</u> | 60 | 4 | 20 | 780 | - | - | Room temperature | - | - | GA | Comparative Example |
| 12 | C | 600 | <u>25</u> | 4 | 20 | 780 | - | - | Room temperature | - | - | GA | Comparative Example |
| 13 | C | 600 | 60 | <u>1</u> | 20 | 780 | - | - | Room temperature | - | - | GA | Comparative Example |
| 14 | C | 600 | 60 | 4 | <u>0.5</u> | 780 | - | - | Room temperature | - | - | GA | Comparative Example |
| 15 | C | 600 | 60 | 4 | <u>120</u> | 780 | - | - | Room temperature | - | - | GA | Comparative Example |
| 16 | C | 600 | 60 | 4 | 20 | <u>720</u> | - | - | Room temperature | - | - | GA | Comparative Example |
| 17 | C | 600 | 60 | 4 | 20 | <u>950</u> | - | - | Room temperature | - | - | GA | Comparative Example |
| 18 | D | 450 | 50 | 3 | 18 | 850 | - | - | Room temperature | 250 | 100 | GA | Example |
| 19 | <u>E</u> | 550 | 65 | 4 | 25 | 800 | - | - | Room temperature | - | - | GI | Comparative Example |
| 20 | <u>F</u> | 550 | 65 | 4 | 25 | 800 | - | - | Room temperature | - | - | GA | Comparative Example |
| 21 | <u>G</u> | 550 | 65 | 4 | 25 | 800 | - | - | Room temperature | - | - | GI | Comparative Example |
| 22 | <u>H</u> | 550 | 65 | 4 | 25 | 800 | - | - | Room temperature | - | - | GA | Comparative Example |
| 23 | I | 600 | 55 | 4 | 18 | 810 | - | - | 50 | 200 | 90 | GA | Example |
| 24 | J | 600 | 70 | 4 | 12 | 800 | - | - | 100 | 300 | 100 | GI | Example |
| 25 | K | 600 | 60 | 4 | 17 | 800 | - | - | 50 | 250 | 100 | GA | Example |
| 26 | L | 600 | 55 | 6 | 48 | 800 | - | - | Room temperature | 300 | 50 | GI | Example |
| 27 | M | 650 | 55 | 10 | 16 | 760 | - | - | Room temperature | - | - | GA | Example |
| 28 | N | 700 | 55 | 3 | 23 | 800 | - | - | Room temperature | 200 | 100 | GA | Example |
| 29 | O | 600 | 70 | 3 | 16 | 770 | - | - | Room temperature | - | - | GA | Example |
| 30 | P | 600 | 60 | 3 | 24 | 820 | - | - | Room temperature | 250 | 100 | GI | Example |
| 31 | Q | 550 | 70 | 3 | 15 | 800 | - | - | Room temperature | 150 | 200 | GA | Example |
| 32 | R | 550 | 40 | 3 | 14 | 780 | - | - | 100 | 200 | 100 | GI | Example |
| 33 | S | 550 | 55 | 3 | 14 | 800 | - | - | 50 | 250 | 100 | GI | Example |
| 34 | T | 550 | 55 | 3 | 25 | 780 | - | - | 50 | 250 | 100 | GA | Example |
| 35 | U | 600 | 60 | 2 | 14 | 870 | - | - | 50 | 300 | 30 | GA | Example |
| 36 | V | 600 | 55 | 4 | 26 | 810 | - | - | 50 | 250 | 100 | GI | Example |
| 37 | W | 400 | 70 | 4 | 31 | 810 | - | - | 150 | 250 | 100 | GA | Example |
| 38 | X | 600 | 70 | 4 | 27 | 790 | - | - | Room temperature | - | - | GA | Example |
| 39 | Y | 650 | 55 | 4 | 34 | 800 | - | - | 250 | 450 | 5 | GA | Example |

Underlines indicate outside the range.

**[0132]** [Table 3]

Table 3

| No. | Steel sample ID | Area ratio of M (%) | Area ratio of α (%) | Area ratio of retained γ (%) | Residual microstructure | Area ratio of ferrite having {001} orientation/ area ratio of all ferrite | Low-temperature-range diffusible hydrogen content of base steel sheet (mass ppm) | YS (MPa) | TS (MPa) | El (%) | TS×El (MPa·%) | λ (%) | Bendability | Anisotropy of stretch flange fracture | Remarks |
|---|---|---|---|---|---|---|---|---|---|---|---|---|---|---|---|
| 1 | A | 46 | 49 | 3 | θ | 0.31 | 0.009 | 681 | 1046 | 13 | 13598 | 42 | Good | Pass | Example |
| 2 | A | 46 | 48 | 4 | θ | 0.32 | 0.006 | 637 | 1024 | 13 | 13312 | 42 | Excellent | Pass | Example |
| 3 | A | 44 | 51 | 3 | θ | 0.28 | 0.002 | 662 | 1028 | 21 | 21588 | 39 | Excellent | Pass | Example |
| 4 | B | 51 | 43 | 3 | θ | 0.48 | 0.007 | 1079 | 1195 | 11 | 13145 | 38 | Good | Pass | Example |
| 5 | B | 62 | 33 | 4 | θ | 0.33 | 0.004 | 1016 | 1236 | 12 | 14832 | 41 | Excellent | Pass | Example |
| 6 | B | 64 | 30 | 4 | θ | 0.40 | 0.000 | 1057 | 1246 | 11 | 13706 | 20 | Excellent | Pass | Example |
| 7 | C | 32 | 64 | 3 | θ | 0.27 | 0.005 | 405 | 792 | 22 | 17424 | 29 | Good | Pass | Example |
| 8 | C | 31 | 66 | 1 | θ | 0.28 | 0.003 | 520 | 842 | 24 | 20208 | 30 | Excellent | Pass | Example |
| 9 | C | 32 | 65 | 1 | θ | 0.33 | 0.001 | 503 | 797 | 22 | 17534 | 29 | Excellent | Pass | Example |
| 10 | C | 21 | 75 | 2 | θ | <u>0.56</u> | 0.005 | 537 | 801 | 25 | 20025 | 27 | Good | <u>Fail</u> | Comparative Example |
| 11 | C | <u>5</u> | <u>92</u> | 0 | θ | 0.26 | 0.006 | 599 | <u>759</u> | 18 | 13662 | 30 | Good | Pass | Comparative Example |
| 12 | C | 33 | 64 | 1 | θ | <u>0.52</u> | 0.003 | 471 | 782 | 20 | 15640 | 23 | Good | <u>Fail</u> | Comparative Example |
| 13 | C | 26 | 72 | 1 | θ | <u>0.68</u> | 0.002 | 590 | 839 | 20 | 16780 | 23 | Good | <u>Fail</u> | Comparative Example |
| 14 | C | <u>5</u> | <u>92</u> | 1 | θ | 0.20 | 0.008 | 526 | <u>757</u> | 18 | 13626 | 30 | Good | Pass | Comparative Example |
| 15 | C | 22 | 73 | 2 | θ | <u>0.61</u> | 0.002 | 453 | 802 | 17 | 13634 | 23 | Good | <u>Fail</u> | Comparative Example |
| 16 | C | <u>0</u> | <u>98</u> | 0 | θ | 0.22 | 0.000 | 429 | <u>741</u> | 22 | 16302 | 25 | Good | Pass | Comparative Example |
| 17 | C | <u>83</u> | <u>15</u> | 2 | θ | 0.32 | <u>0.017</u> | 615 | 830 | 11 | <u>9130</u> | <u>17</u> | Poor | <u>Fail</u> | Comparative Example |
| 18 | D | 58 | 36 | 3 | θ | 0.43 | 0.000 | 816 | 1231 | 16 | 19696 | 26 | Excellent | Pass | Example |
| 19 | <u>E</u> | <u>6</u> | <u>91</u> | 1 | θ | 0.38 | 0.004 | 423 | <u>766</u> | 18 | 13788 | 22 | Good | Pass | Comparative Example |
| 20 | <u>F</u> | 27 | 58 | <u>11</u> | θ | 0.22 | <u>0.018</u> | 504 | 822 | 18 | 14796 | <u>18</u> | Poor | <u>Fail</u> | Comparative Example |
| 21 | <u>G</u> | <u>5</u> | <u>91</u> | 0 | θ | 0.36 | 0.001 | 499 | <u>750</u> | 18 | 13500 | 25 | Good | Pass | Comparative Example |
| 22 | <u>H</u> | 23 | 74 | 0 | θ | <u>0.55</u> | 0.002 | 432 | 833 | 9 | <u>7497</u> | 29 | Good | <u>Fail</u> | Comparative Example |
| 23 | I | 45 | 48 | 5 | θ | 0.41 | 0.002 | 709 | 984 | 17 | 16728 | 23 | Excellent | Pass | Example |
| 24 | J | 45 | 48 | 5 | θ | 0.38 | 0.002 | 682 | 1045 | 15 | 15675 | 34 | Excellent | Pass | Example |
| 25 | K | 42 | 50 | 4 | θ | 0.29 | 0.000 | 695 | 1049 | 13 | 13637 | 24 | Excellent | Pass | Example |
| 26 | L | 47 | 46 | 3 | θ | 0.42 | 0.000 | 589 | 1000 | 13 | 13000 | 29 | Excellent | Pass | Example |
| 27 | M | 36 | 62 | 1 | θ | 0.23 | 0.001 | 615 | 841 | 16 | 13456 | 25 | Good | Pass | Example |
| 28 | N | 43 | 50 | 5 | θ | 0.29 | 0.002 | 601 | 1009 | 16 | 16144 | 36 | Excellent | Pass | Example |
| 29 | O | 26 | 70 | 1 | θ | 0.37 | 0.001 | 596 | 784 | 19 | 14896 | 23 | Good | Pass | Example |
| 30 | P | 45 | 49 | 5 | θ | 0.30 | 0.000 | 618 | 1030 | 18 | 18540 | 33 | Excellent | Pass | Example |
| 31 | Q | 34 | 62 | 3 | θ | 0.24 | 0.006 | 564 | 848 | 16 | 13568 | 26 | Excellent | Pass | Example |
| 32 | R | 55 | 37 | 4 | θ | 0.32 | 0.008 | 588 | 1034 | 14 | 14476 | 27 | Excellent | Pass | Example |
| 33 | S | 48 | 46 | 5 | θ | 0.26 | 0.000 | 706 | 999 | 15 | 14985 | 23 | Excellent | Pass | Example |
| 34 | T | 51 | 42 | 4 | θ | 0.28 | 0.000 | 641 | 999 | 14 | 13986 | 24 | Excellent | Pass | Example |
| 35 | U | 51 | 45 | 3 | θ | 0.44 | 0.000 | 945 | 1247 | 11 | 13717 | 25 | Excellent | Pass | Example |
| 36 | V | 46 | 48 | 4 | θ | 0.37 | 0.000 | 731 | 1010 | 20 | 20200 | 39 | Excellent | Pass | Example |
| 37 | W | 49 | 44 | 5 | θ | 0.28 | 0.008 | 656 | 992 | 16 | 15872 | 32 | Excellent | Pass | Example |
| 38 | X | 30 | 67 | 2 | θ | 0.22 | 0.009 | 482 | 834 | 21 | 17514 | 20 | Good | Pass | Example |
| 39 | Y | 53 | 41 | 5 | θ | 0.40 | 0.004 | 687 | 1036 | 19 | 19684 | 20 | Excellent | Pass | Example |

Underlines indicate outside the range.

M: martensite, α: ferrite, retained γ: retained austenite, θ: cementite and/or metastable carbides

As shown in Table 3, all Examples had a TS of 780 MPa or more, high ductility, high stretch flangeability and bendability, and reduced anisotropy of stretch flange fracture. In Comparative Examples, on the other hand, at least one of TS, ductility, stretch flangeability, bendability, and anisotropy of stretch flange fracture was insufficient.

[Test Nos. 40 to 63]

Steel slabs (steel materials) having the chemical compositions shown in Table 1 with the balance consisting of Fe and inevitable impurities were obtained by steelmaking using a converter and continuous casting. The obtained steel slabs were each heated to 1250 °C and subjected to rough rolling to obtain a sheet bar. The obtained sheet bar was then subjected to finish rolling at a finish rolling temperature of 900 °C and coiled under the conditions shown in Table 4 to obtain a hot-rolled steel sheet. The obtained hot-rolled steel sheet was pickled and then subjected to cold rolling under the conditions shown in Table 4 to obtain a cold-rolled steel sheet with a sheet thickness of 1.4 mm.

A metal electroplating treatment process was performed on some of the cold-rolled steel sheets. In the "Application (plating type)" column for metal electroplating treatment in Table 4, "Applied (Fe)" is an example where Fe-based electroplating treatment was applied, and "Applied (Ni)" is an example where Ni-based electroplating treatment was applied. The composition of the metal electroplated layer by Fe-based electroplating contained Fe: 95 mass% to 100 mass% with the balance consisting of inevitable impurities. The composition of the metal electroplated layer by Ni-based electroplating contained Ni: 95 mass% to 100 mass% with the balance consisting of inevitable impurities

Next, the cold-rolled steel sheet was subjected to the type of coating treatment (GI, GA) shown in Table 4 to obtain a coated steel sheet having a hot-dip galvanized layer on both sides. The conditions for GI and GA were the same as above.

Next, some of the coated steel sheets were subjected to heat retention treatment or to reheating treatment after cooling under the conditions shown in Table 4. Conditions not specified were in accordance with conventional methods.

For each of the hot-dip galvanized steel sheets thus obtained, the microstructure at the position of 1/4 of the sheet thickness of the base steel sheet was identified and the proportion of the area ratio of ferrite having {001} orientation to the area ratio of all ferrite (area ratio of ferrite having {001} orientation/area ratio of all ferrite) and the low-temperature-range diffusible hydrogen content of the base steel sheet were measured by the above-described test methods. The results are shown in Table 5.

The chemical composition of the base steel sheet in each obtained steel sheet was substantially the same as the chemical composition at the steel slab stage. All conforming steels were within the range of the chemical composition according to the embodiment of the present disclosure.

For each of the obtained hot-dip galvanized steel sheets, tensile property, stretch flangeability, anisotropy of stretch flange fracture, and bendability were evaluated using the above-described test methods. The results are shown in Table 5.

Furthermore, for each of the obtained hot-dip galvanized steel sheets, the thickness of the soft surface layer and the coating weight of the metal plated layer were measured. The results are shown in Table 5.

[Thickness of soft surface layer]

After smoothing a sheet thickness section (L-section) parallel to the rolling direction of the base steel sheet by wet polishing, measurement was performed using a Vickers hardness meter with a load of 10 gf from a position of 1 $\mu$m in the sheet thickness direction from the surface of the base steel sheet to a position of 100 $\mu$m in the sheet thickness direction at 1 $\mu$m intervals. After this, measurement was performed at 20 $\mu$m intervals up to the sheet thickness center. A region where the hardness was 85 % or less of the hardness at the position of 1/4 of the sheet thickness was defined as the soft layer (soft surface layer), and the thickness of the region in the sheet thickness direction was taken as the thickness of the soft layer.

[Coating weight of metal plated layer]

A sample of 10 mm $\times$ 15 mm size was collected from the hot-dip galvanized steel sheet and embedded in resin to prepare a cross-section resin-embedded sample. Any three parts of the cross section were observed using a scanning electron microscope (SEM) with an accelerating voltage of 15 kV and 2000x to 10000x magnification depending on the thickness of the Fe-based plated layer. The average value of the thicknesses in the three observation fields was multiplied by the specific gravity of iron to calculate the coating weight of the Fe-based plated layer per side.

[Nanohardness of soft surface layer]

The nanohardness of the soft surface layer of the base steel sheet in the obtained hot-dip galvanized steel sheet was measured. The results are shown in Table 5.

The nanohardness at the 1/4 position of the soft surface layer was measured as follows. After the coating was peeled off from the obtained hot-dip galvanized steel sheet, mechanical polishing, buffing with diamond and alumina, and colloidal silica polishing were performed from the surface of the base steel sheet to the position of 1/4 of the depth of the soft surface layer from the surface of the base steel sheet in the sheet thickness direction. A nanoindentation device (Tribo-950 produced by Hysitron, Inc.) was used to measure the nanohardness at a total of 512 points with a Berkovich diamond indenter under the following conditions:

Loading and unloading speed: 50 $\mu$N/s
Maximum load: 500 $\mu$N
Measurement region: 50 $\mu$m $\times$ 50 $\mu$m

Data collection pitch: 5 msec
Indentation spacing: 2 μm.

Next, mechanical polishing, buffing with diamond and alumina, and colloidal silica polishing were performed to the position of 1/2 of the depth of the soft surface layer in the sheet thickness direction. Tribo-950 produced by Hysitron, Inc. was used to measure the nanohardness at a total of 512 points with a Berkovich diamond indenter under the same conditions as above.

[V bend + orthogonal VDA bend test, axial crush fracture test]

For each of the obtained hot-dip galvanized steel sheets, a V bend + orthogonal VDA bend test and an axial crush fracture test were conducted. The results are shown in Table 5.
In the case of hot-dip galvanized steel sheets with a sheet thickness of more than 1.2 mm, the V bend + orthogonal VDA bend test and the axial crush test were conducted on steel sheets with a sheet thickness of 1.2 mm, taking into account the influence of the sheet thickness. Each steel sheet with a sheet thickness of more than 1.2 mm was ground on one side to make the sheet thickness 1.2 mm. In the case of hot-dip galvanized steel sheets with a sheet thickness of less than 1.2 mm, the V bend + orthogonal VDA bend test and the axial crush test were conducted without grinding because the influence of the sheet thickness was insignificant.

The V bend + orthogonal VDA bend test was conducted as follows.

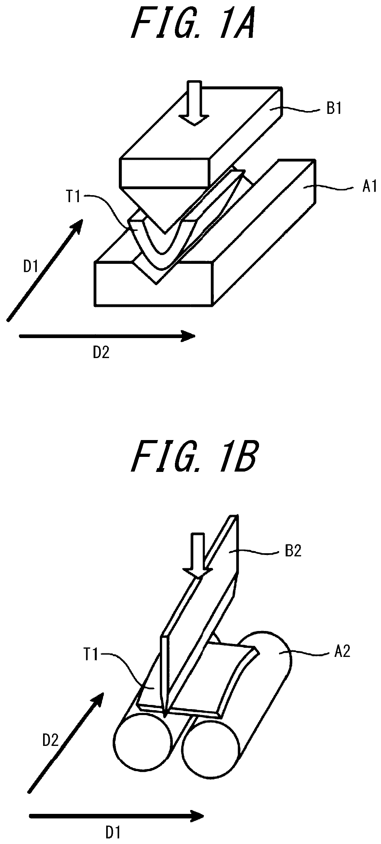

A 60 mm × 65 mm test piece was collected from the obtained hot-dip galvanized steel sheet by shearing and end grinding, with the 60 mm side parallel to the rolling (L) direction. A test piece was prepared by 90° bending (primary bending) in the rolling (L) direction with the width (C) direction as the axis at a curvature radius/sheet thickness of 4.2. In the 90° bending (primary bending), a punch B1 was pressed against the steel sheet placed on a die A1 having a V groove to obtain a test piece T1, as illustrated in FIG. 1A. Next, a punch B2 was pressed against the test piece T1 placed on support rolls A2 so that the bending direction would be orthogonal to the rolling direction to perform orthogonal bending (secondary bending), as illustrated in FIG. 1B. In FIGS. 1A and 1B, D1 indicates the width (C) direction and D2 indicates the rolling (L) direction.
The V bending conditions in the V bend + orthogonal VDA bend test are as follows:

Test method: die support, punch press
Forming load: 10 tons
Test speed: 30 mm/min
Holding time: 5 seconds
Bending direction: rolling (L) direction.

The VDA bending conditions in the V bend + orthogonal VDA bend test are as follows:

Test method: roll support, punch press
Roll diameter: φ30 mm
Punch tip R: 0.4 mm
Roll distance: (sheet thickness × 2) + 0.5 mm
Stroke speed: 20 mm/min
Test piece size: 60 mm × 60 mm
Bending direction: direction (C) orthogonal to rolling direction.

The stroke at maximum load was determined in the stroke-load curve obtained when the VDA bending was performed. The average value of the stroke at maximum load when the V bend + orthogonal VDA bend test was conducted three times was taken as $SF_{max}$ (mm). Collision fracture resistance (resistance to bending fracture) was determined as excellent if $SF_{max}$ was 26.0 mm or more.

[Axial crush test]

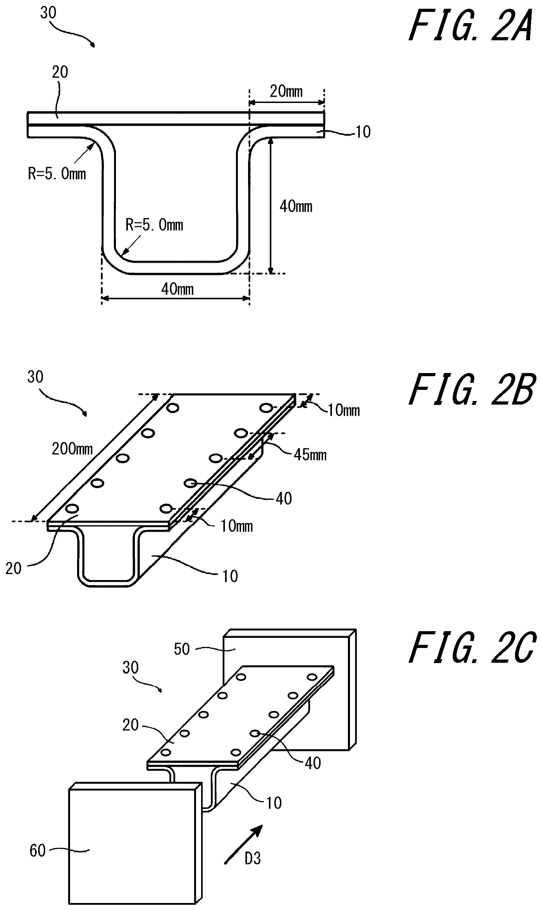

The axial crush test was conducted as follows.
A 150 mm × 100 mm test piece was collected from the obtained hot-dip galvanized steel sheet by shearing, with the 150 mm side parallel to the rolling (L) direction. Using a die with a punch shoulder radius of 5.0 mm and a die shoulder radius of 5.0 mm, a hat-shaped member 10 illustrated in FIGS. 2A and 2B was prepared by forming (bending) to a depth of 40 mm.

Moreover, the steel sheet used as the material for the hat-shaped member was cut out to a size of 80 mm × 100 mm. A cut-out steel sheet 20 and the hat-shaped member 10 were spot welded to prepare a test member 30 illustrated in FIGS. 2A and 2B. FIG. 2A is a front view of the test member 30 prepared by spot welding the hat-shaped member 10 and the steel sheet 20. FIG. 2B is a perspective view of the test member 30. The positions of spot weld portions 40 were such that the distance between the end of the steel sheet and the weld was 10 mm and the distance between the welds was 20 mm, as illustrated in FIG. 2B. Next, as illustrated in FIG. 2C, the test member 30 was joined to a base plate 50 by TIG welding to prepare an axial crush test sample. An impactor 60 was then made to collide with the prepared axial crush test sample at a constant collision velocity of 10 mm/min to crush the axial crush test sample by 70 mm. The crush direction D3 was parallel to the longitudinal direction of the test member 30, as illustrated in FIG. 2C.

The appearance of the test member 30 after the test was observed to check whether there was axial crush fracture (external crack).

In Table 5, "A" indicates that no external crack was found, "B" indicates that an external crack was found in one location, and "C" indicates that an external crack was found in two or more locations. The collision fracture resistance (resistance to axial crush fracture) was determined as excellent in the case of "A" or "B".

[Table 4]

Table 4

| No. | Steel sample ID | Hot rolling process | Cold rolling process | | Metal electroplating treatment process | Annealing process | | | Cooling process | | | Reheating process | | Hot-dip galvanizing treatment process | Remarks |
|---|---|---|---|---|---|---|---|---|---|---|---|---|---|---|---|
| | | Coiling temperature | Total rolling reduction ratio | Number of passes from 30% or more to total rolling reduction ratio | Application (plating type) | Average heating rate from 250°C to 600°C | Annealing temperature | Dew point | Heat retention temperature | Heat retention time | Cooling stop temperature | Reheating temperature | Heat retention time at reheating temperature | Type | |
| | | (°C) | (%) | (pass) | | (°C/s) | (°C) | (°C) | (°C) | (s) | (°C) | (°C) | (s) | | |
| 40 | B | 490 | 50 | 4 | Not applied | 20 | 830 | -15 | - | - | 50 | 300 | 40 | GA | Example |
| 41 | B | 490 | 50 | 4 | Not applied | 20 | 830 | 10 | - | - | 50 | 300 | 40 | GA | Example |
| 42 | B | 490 | 50 | 4 | Applied (Fe) | 20 | 830 | -15 | - | - | 50 | 300 | 40 | GI | Example |
| 43 | B | 490 | 50 | 4 | Applied (Fe) | 20 | 830 | 10 | - | - | 50 | 300 | 40 | GA | Example |
| 44 | B | 490 | 50 | 4 | Applied (Ni) | 20 | 830 | 10 | - | - | 50 | 300 | 40 | GA | Example |
| 45 | B | 490 | 50 | 4 | Not applied | 20 | 830 | 10 | 150 | 100 | 50 | 300 | 40 | GA | Example |
| 46 | B | 490 | 50 | 4 | Applied (Fe) | 20 | 830 | -15 | 150 | 100 | 50 | 300 | 40 | GI | Example |
| 47 | B | 490 | 50 | 4 | Applied (Fe) | 20 | 830 | 10 | 150 | 100 | 50 | 300 | 40 | GA | Example |
| 48 | C | 580 | 60 | 3 | Not applied | 18 | 790 | -20 | - | - | Room temperature | - | - | GA | Example |
| 49 | C | 580 | 60 | 3 | Not applied | 18 | 790 | 5 | - | - | Room temperature | - | - | GI | Example |
| 50 | C | 580 | 60 | 3 | Applied (Fe) | 18 | 790 | -20 | - | - | Room temperature | - | - | GA | Example |
| 51 | C | 580 | 60 | 3 | Applied (Fe) | 18 | 790 | 5 | - | - | Room temperature | - | - | GI | Example |
| 52 | C | 580 | 60 | 3 | Applied (Ni) | 18 | 790 | 5 | - | - | Room temperature | - | - | GA | Example |
| 53 | C | 580 | 60 | 3 | Not applied | 18 | 790 | 5 | 200 | 50 | Room temperature | - | - | GA | Example |
| 54 | C | 580 | 60 | 3 | Applied (Fe) | 18 | 790 | -20 | 200 | 50 | Room temperature | - | - | GA | Example |
| 55 | C | 580 | 60 | 3 | Applied (Fe) | 18 | 790 | 5 | 200 | 50 | Room temperature | - | - | GA | Example |
| 56 | N | 540 | 55 | 4 | Not applied | 22 | 810 | -20 | - | - | Room temperature | 200 | 80 | GA | Example |
| 57 | N | 540 | 60 | 4 | Not applied | 22 | 810 | 10 | - | - | Room temperature | 200 | 80 | GI | Example |
| 58 | N | 540 | 60 | 4 | Applied (Fe) | 22 | 810 | -20 | - | - | Room temperature | 200 | 80 | GA | Example |
| 59 | N | 540 | 60 | 4 | Applied (Fe) | 22 | 810 | 10 | - | - | Room temperature | 200 | 80 | GA | Example |
| 60 | N | 540 | 60 | 4 | Applied (Ni) | 22 | 810 | 10 | - | - | Room temperature | 200 | 80 | GA | Example |
| 61 | N | 540 | 60 | 4 | Not applied | 22 | 810 | 10 | 200 | 100 | Room temperature | 200 | 80 | GA | Example |
| 62 | N | 540 | 60 | 4 | Applied (Fe) | 22 | 810 | -20 | 200 | 100 | Room temperature | 200 | 80 | GA | Example |
| 63 | N | 540 | 60 | 4 | Applied (Fe) | 22 | 810 | 10 | 200 | 100 | Room temperature | 200 | 80 | GI | Example |

Underlines indicate outside the range.

27

[Table 5]

| No. | Steel sample ID | Area ratio of M (%) | Area ratio of α (%) | Area ratio of retained γ (%) | Residual microstructure | Area ratio of ferrite having {001} orientation/area ratio of all ferrite | Low-temperature-range diffusible hydrogen content of base steel sheet (mass ppm) | Soft layer thickness (μm) | Metal coating weight (g/m²) | Proportion of Hn of 7GPa or more | Standard deviation of Hn at 1/4 position of soft surface layer (GPa) | Standard deviation of Hn at 1/2 position of soft surface layer (GPa) | YS (MPa) | TS (MPa) | El (%) | TS×El (MPa·%) | λ (%) | Bendability | Anisotropy of stretch flange fracture | SF$_{max}$ (mm) | Axial crush fracture | Remarks |
|---|---|---|---|---|---|---|---|---|---|---|---|---|---|---|---|---|---|---|---|---|---|---|
| 40 | B | 47 | 51 | 5 | θ | 0.48 | 0.002 | 15 | - | 0.19 | 1.9 | 2.3 | 882 | 1227 | 11 | 13497 | 33 | Good | Pass | 26.6 | A | Example |
| 41 | B | 46 | 52 | 3 | θ | 0.32 | 0.000 | 44 | - | 0.06 | 1.5 | 1.6 | 942 | 1201 | 12 | 14412 | 42 | Excellent | Pass | 27.6 | A | Example |
| 42 | B | 50 | 48 | 5 | θ | 0.44 | 0.002 | 23 | 10.0 | 0.20 | 1.7 | 2.0 | 966 | 1200 | 13 | 15600 | 36 | Excellent | Pass | 27.7 | A | Example |
| 43 | B | 47 | 51 | 4 | θ | 0.44 | 0.000 | 68 | 10.0 | 0.01 | 0.7 | 0.8 | 989 | 1242 | 10 | 12420 | 35 | Excellent | Pass | 28.8 | A | Example |
| 44 | B | 52 | 46 | 4 | θ | 0.40 | 0.000 | 49 | 10.0 | 0.02 | 0.8 | 1.0 | 900 | 1246 | 11 | 13706 | 40 | Excellent | Pass | 29.6 | A | Example |
| 45 | B | 50 | 48 | 2 | θ | 0.35 | 0.003 | 36 | - | 0.05 | 1.4 | 1.5 | 962 | 1225 | 11 | 13475 | 43 | Excellent | Pass | 28.4 | A | Example |
| 46 | B | 55 | 43 | 5 | θ | 0.35 | 0.004 | 13 | 10.0 | 0.19 | 1.6 | 1.9 | 989 | 1207 | 10 | 12070 | 43 | Excellent | Pass | 27.7 | A | Example |
| 47 | B | 49 | 49 | 4 | θ | 0.43 | 0.003 | 57 | 10.0 | 0.01 | 0.6 | 0.7 | 911 | 1215 | 13 | 15795 | 39 | Excellent | Pass | 30.0 | A | Example |
| 48 | C | 33 | 65 | 2 | θ | 0.27 | 0.004 | 14 | - | 0.22 | 2.1 | 2.4 | 414 | 813 | 21 | 17073 | 33 | Good | Pass | 26.7 | B | Example |
| 49 | C | 31 | 67 | 3 | θ | 0.38 | 0.002 | 40 | - | 0.10 | 1.6 | 2.0 | 405 | 828 | 21 | 17388 | 32 | Excellent | Pass | 27.9 | A | Example |
| 50 | C | 35 | 63 | 4 | θ | 0.30 | 0.004 | 15 | 16.0 | 0.24 | 2.0 | 2.3 | 419 | 789 | 22 | 17358 | 30 | Excellent | Pass | 27.5 | A | Example |
| 51 | C | 30 | 68 | 3 | θ | 0.30 | 0.002 | 61 | 16.0 | 0.04 | 0.8 | 1.2 | 397 | 812 | 22 | 17864 | 30 | Excellent | Pass | 28.8 | A | Example |
| 52 | C | 34 | 64 | 3 | θ | 0.23 | 0.002 | 57 | 16.0 | 0.04 | 0.9 | 1.3 | 410 | 818 | 21 | 17178 | 34 | Excellent | Pass | 29.6 | A | Example |
| 53 | C | 34 | 64 | 5 | θ | 0.32 | 0.001 | 38 | - | 0.09 | 1.5 | 1.9 | 407 | 797 | 20 | 15940 | 30 | Excellent | Pass | 28.2 | A | Example |
| 54 | C | 32 | 66 | 2 | θ | 0.32 | 0.003 | 22 | 16.0 | 0.23 | 1.8 | 2.1 | 399 | 828 | 23 | 19044 | 36 | Excellent | Pass | 28.1 | A | Example |
| 55 | C | 33 | 65 | 5 | θ | 0.26 | 0.001 | 56 | 16.0 | 0.03 | 0.7 | 1.1 | 424 | 795 | 24 | 19080 | 33 | Excellent | Pass | 29.5 | A | Example |
| 56 | N | 42 | 56 | 5 | θ | 0.29 | 0.004 | 14 | - | 0.16 | 2.0 | 2.4 | 599 | 1022 | 18 | 18396 | 33 | Excellent | Pass | 26.9 | B | Example |
| 57 | N | 43 | 55 | 2 | θ | 0.36 | 0.002 | 38 | - | 0.05 | 1.3 | 1.4 | 620 | 1037 | 16 | 16592 | 30 | Excellent | Pass | 27.8 | A | Example |
| 58 | N | 41 | 57 | 2 | θ | 0.29 | 0.004 | 16 | 12.0 | 0.18 | 1.7 | 1.9 | 636 | 1016 | 16 | 16256 | 36 | Excellent | Pass | 27.5 | A | Example |
| 59 | N | 40 | 58 | 5 | θ | 0.29 | 0.002 | 68 | 12.0 | 0.03 | 0.4 | 0.6 | 654 | 1018 | 17 | 17306 | 37 | Excellent | Pass | 29.2 | A | Example |
| 60 | N | 41 | 57 | 3 | θ | 0.41 | 0.002 | 58 | 12.0 | 0.03 | 0.7 | 1.0 | 643 | 1022 | 18 | 18396 | 37 | Excellent | Pass | 29.5 | A | Example |
| 61 | N | 44 | 54 | 4 | θ | 0.40 | 0.000 | 39 | - | 0.04 | 1.2 | 1.3 | 617 | 999 | 18 | 17982 | 31 | Excellent | Pass | 28.5 | A | Example |
| 62 | N | 41 | 57 | 2 | θ | 0.27 | 0.001 | 20 | 12.0 | 0.17 | 1.6 | 1.8 | 643 | 994 | 15 | 14910 | 32 | Excellent | Pass | 28.7 | A | Example |
| 63 | N | 44 | 54 | 2 | θ | 0.42 | 0.000 | 59 | 12.0 | 0.02 | 0.3 | 0.5 | 590 | 1028 | 17 | 17476 | 31 | Excellent | Pass | 30.0 | A | Example |

Underlines indicate outside the range.

M: martensite, α: ferrite, retained γ: retained austenite, θ: cementite and/or metastable carbides

As shown in Table 5, all Examples had a TS of 780 MPa or more, high ductility, high stretch flangeability and bendability, and reduced anisotropy of stretch flange fracture. In addition, collision fracture resistance (bending fracture resistance and axial crush property) was excellent.

INDUSTRIAL APPLICABILITY

It is thus possible to provide a hot-dip galvanized steel sheet having high strength, high ductility, high stretch flangeability and bendability, and reduced anisotropy of stretch flange fracture. The hot-dip galvanized steel sheet has various excellent properties, and accordingly can be used for automotive framework structural components of various sizes and shapes, etc. This can make the automotive body more lightweight to improve fuel efficiency. The presently disclosed technology thus has very high industrial value.

REFERENCE SIGNS LIST

A1    die
A2    support roll
B1    punch
B2    punch
T1    test piece
D 1    width (C) direction
D2    rolling (L) direction
D3    crushing direction
10    hat-shaped member
20    steel sheet
30    test member
40    spot weld portion
50    base plate
60    impactor

**Claims**

1.   A hot-dip galvanized steel sheet comprising:

   a base steel sheet; and
   a hot-dip galvanized layer formed on a surface of the base steel sheet,
   wherein the base steel sheet includes:

      a chemical composition containing, in mass%,
      C: 0.030 % or more and 0.500 % or less,
      Si: 0.01 % or more and 2.50 % or less,
      Mn: 0.10 % or more and 5.00 % or less,
      P: 0.100 % or less,
      S: 0.0200 % or less,
      Al: 1.000 % or less,
      N: 0.0100 % or less, and
      O: 0.0100 % or less
      with a balance consisting of Fe and inevitable impurities; and
      a steel microstructure at a position of 1/4 of a sheet thickness of the base steel sheet in which an area ratio of martensite is 10 % or more and 80 % or less, an area ratio of ferrite is 20 % or more and 90 % or less, an area ratio of retained austenite is 10 % or less, and a proportion of an area ratio of ferrite having {001} orientation to an area ratio of all ferrite is 0.50 or less, and
      a low-temperature-range diffusible hydrogen content in the base steel sheet is 0.015 mass ppm or less, the low-temperature-range diffusible hydrogen content being an amount of hydrogen released when the base steel sheet is heated up to 50 °C.

2.   The hot-dip galvanized steel sheet according to claim 1, wherein the chemical composition further contains, in mass%, at least one element selected from the group consisting of

Ti: 0.200 % or less,
Nb: 0.200 % or less,
V: 0.200 % or less,
Ta: 0.10 % or less,
W: 0.10 % or less,
B: 0.0100 % or less,
Cr: 1.00 % or less,
Mo: 1.00 % or less,
Ni: 1.00 % or less,
Co: 0.010 % or less,
Cu: 1.00 % or less,
Sn: 0.200 % or less,
Sb: 0.200 % or less,
Ca: 0.0100 % or less,
Mg: 0.0100 % or less,
REM: 0.0100 % or less,
Zr: 0.100 % or less,
Te: 0.100 % or less,
Hf: 0.10 % or less, and
Bi: 0.200 % or less.

3. The hot-dip galvanized steel sheet according to claim 1 or 2, comprising
   a metal coated or plated layer between the base steel sheet and the hot-dip galvanized layer.

4. The hot-dip galvanized steel sheet according to any one of claims 1 to 3, wherein the base steel sheet includes a soft surface layer that is a region of 200 $\mu$m or less from the surface of the base steel sheet in a sheet thickness direction and having a Vickers hardness of 85 % or less of a Vickers hardness at the position of 1/4 of the sheet thickness of the base steel sheet.

5. The hot-dip galvanized steel sheet according to claim 4, wherein

   when nanohardness is measured at 300 points or more in a 50 $\mu$m $\times$ 50 $\mu$m region of a sheet plane at each of a position of 1/4 of a depth of the soft surface layer from the surface of the base steel sheet in the sheet thickness direction and a position of 1/2 of the depth of the soft surface layer from the surface of the base steel sheet in the sheet thickness direction,
   a proportion of a number of measurements in which the nanohardness of the sheet plane at the position of 1/4 of the depth of the soft surface layer from the surface of the base steel sheet in the sheet thickness direction is 7.0 GPa or more is 0.10 or less relative to a total number of measurements,
   a standard deviation $\sigma$ of the nanohardness of the sheet plane at the position of 1/4 of the depth of the soft surface layer from the surface of the base steel sheet in the sheet thickness direction is 1.8 GPa or less, and
   a standard deviation $\sigma$ of the nanohardness of the sheet plane at the position of 1/2 of the depth of the soft surface layer from the surface of the base steel sheet in the sheet thickness direction is 2.2 GPa or less.

6. The hot-dip galvanized steel sheet according to any one of claims 1 to 5, wherein the hot-dip galvanized layer is a galvannealed layer.

7. A member produced using the hot-dip galvanized steel sheet according to any one of claims 1 to 6.

8. An automotive framework structural component or automotive reinforcing component comprising the member according to claim 7.

9. A production method for a hot-dip galvanized steel sheet, the production method comprising:

   subjecting a steel slab having the chemical composition according to claim 1 or 2 to hot rolling under a condition that a coiling temperature is 400 °C or more and 700 °C or less, to obtain a hot-rolled steel sheet;
   thereafter pickling the hot-rolled steel sheet;
   thereafter subjecting the hot-rolled steel sheet to cold rolling under a condition that a total rolling reduction ratio is 40 % or more and a number of passes from when a cumulative rolling reduction ratio of 30 % or more is reached to when the total rolling reduction ratio is reached is 2 or more, to obtain a cold-rolled steel sheet;

thereafter subjecting the cold-rolled steel sheet to annealing under a condition that an average heating rate in a temperature range of 250 °C or more and 600 °C or less is 1.0 °C/s or more and 100 °C/s or less and an annealing temperature is 750 °C or more and 900 °C or less;

thereafter subjecting the cold-rolled steel sheet to hot-dip galvanizing treatment to obtain a coated steel sheet; and

thereafter cooling the coated steel sheet.

10. The production method for a hot-dip galvanized steel sheet according to claim 9, wherein in the cooling of the coated steel sheet, the coated steel sheet is kept in a temperature range of 100 °C or more and 450 °C or less for 5 seconds or more and then cooled.

11. The production method for a hot-dip galvanized steel sheet according to claim 9, wherein in the cooling of the coated steel sheet, cooling is stopped at a cooling stop temperature of 300 °C or less, and then the coated steel sheet is reheated to a temperature range of (the cooling stop temperature + 50 °C) or more and 450 °C or less and kept in the temperature range for 5 seconds or more, and then cooled.

12. The production method for a hot-dip galvanized steel sheet according to any one of claims 9 to 11, wherein the annealing is performed in an atmosphere with a dew point of -25 °C or more.

13. The production method for a hot-dip galvanized steel sheet according to any one of claims 9 to 12, comprising performing metal coating or plating treatment on one or both sides of the cold-rolled steel sheet to form a metal coated or plated layer, before the annealing.

14. The production method for a hot-dip galvanized steel sheet according to any one of claims 9 to 13, comprising subjecting the steel sheet after the hot-dip galvanizing treatment to alloying treatment.

15. A production method for a member, the production method comprising

subjecting the hot-dip galvanized steel sheet according to any one of claims 1 to 8 to at least one of forming or joining to obtain the member.

# FIG. 1A

# FIG. 1B

## FIG. 2A

30

20

20mm

R=5.0mm

10

R=5.0mm

40mm

40mm

## FIG. 2B

30

200mm

10mm

45mm

40

10mm

20

10

## FIG. 2C

50

30

20

40

10

60

D3

## INTERNATIONAL SEARCH REPORT

| International application No. |
| --- |
| **PCT/JP2022/044482** |

| A. | CLASSIFICATION OF SUBJECT MATTER |
| --- | --- |

*C21D 8/02*(2006.01)i; *C21D 9/46*(2006.01)i; *C22C 38/00*(2006.01)i; *C22C 38/60*(2006.01)i; *C23C 2/06*(2006.01)i
FI:    C22C38/00 301T; C22C38/60; C21D9/46 J; C21D8/02 A; C23C2/06

According to International Patent Classification (IPC) or to both national classification and IPC

| B. | FIELDS SEARCHED |
| --- | --- |

Minimum documentation searched (classification system followed by classification symbols)

C21D8/02; C21D9/46; C22C38/00-38/60; C23C2/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113528945 A (SHOUGANG GROUP CO., LTD.) 22 October 2021 (2021-10-22) entire text, all drawings | 1-15 |
| A | WO 2020/170542 A1 (JFE STEEL CORPORATION) 27 August 2020 (2020-08-27) entire text | 1-15 |
| A | WO 2021/140663 A1 (JFE STEEL CORPORATION) 15 July 2021 (2021-07-15) entire text | 1-15 |
| A | WO 2012/133540 A1 (NIPPON STEEL CORPORATION) 04 October 2012 (2012-10-04) entire text, all drawings | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 January 2023** | **31 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 600 382 A1

**INTERNATIONAL SEARCH REPORT**
Information on patent family members

International application No.

**PCT/JP2022/044482**

| Patent document cited in search report | | | Publication date (day/month/year) | Patent family member(s) | | | Publication date (day/month/year) |
|---|---|---|---|---|---|---|---|
| CN | 113528945 | A | 22 October 2021 | (Family: none) | | | |
| WO | 2020/170542 | A1 | 27 August 2020 | JP entire text | 6777267 | B1 | |
| WO | 2021/140663 | A1 | 15 July 2021 | EP entire text | 4067513 | A1 | |
| | | | | KR | 10-2022-0110826 | A | |
| | | | | CN | 114981457 | A | |
| WO | 2012/133540 | A1 | 04 October 2012 | US entire text, all drawings | 2014/0000765 | A1 | |
| | | | | US | 2014/0014236 | A1 | |
| | | | | EP | 2692895 | A1 | |
| | | | | EP | 2692893 | A1 | |
| | | | | CN | 103476960 | A | |
| | | | | CN | 103459647 | A | |
| | | | | KR | 10-2013-0123460 | A | |
| | | | | KR | 10-2013-0125821 | A | |
| | | | | WO | 2012/133563 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020170542 A1